# EUROPEAN PATENT APPLICATION

(11) **EP 1 400 911 A2**
(43) Date of publication of application: **24.03.2004**
(21) Application number: 03255701.9
(22) Date of filing: 11.09.2003
(51) Int. Cl.: G06F 19/00

(54) **Settlement processing apparatus, system, method, and program thereof, and recording medium for recording the program**

(30) Priority: 12.09.2002 JP 2002266525
(71) Applicant: Pioneer Corporation, Tokyo 153-8654 (JP); Increment P Corporation, Tokyo 153-8665 (JP)
(72) Inventor: Nozaki, Takashi c/o Increment P Corporation, Tokyo 153-8665 (JP); Amano, Kouji c/o Increment P Corporation, Tokyo 153-8665 (JP)
(74) Representative: Haley, Stephen

(57) **Abstract**

A settlement processing apparatus which easily executes a settlement processing is provided. From a customer who desires registration, a database (53) stores in advance customer specific data, which includes device identification data for identifying the customer and specifies the customer. A server communicator (51 ), which corresponds to a customer identification data attaining section and a purchase data attaining section, attains the device identification data and purchase data concerning the contents of a debt. An authentication section (522) compares the device identification data attained by the server communicator (51) with the customer-specific data stored in the database (53), to authenticate the device identification data. If the authentication section (522) authenticates the device identification data, a settlement processing section (523) performs a processing for settling a debt, based on the customer-specific data corresponding to the device identification data and the attained purchase data. After completion of the processing, the settlement processing section (523) processes settlement completion data indicating that the processing has been completed, making the settlement completion data be able to be notified to the customer.

## Description

### BACKGROUND TO THE INVENTION

The present invention relates to a settlement processing apparatus which carries out a settlement processing for settling a debt issued by a business transaction with a customer, a system, method, and program thereof, and a recording medium which records the program.

Conventionally, settlements using credit cards have widely spread. In use of a credit card, a customer brings an item to buy to a cashier together with the credit card. The shop receives the credit card from the customer and makes an inquiry about the customer to the credit company of the card, to check the validity of the card (so-called credit inquiry).

If the card is usable as a result of the credit inquiry, the shop accepts the sale of the item and settles a payment on the item. The shop then issues a sales slip and asks the customer to sign the slip. A copy of the signed sales slip is then given to the customer.

In recent years, there has been a known settlement processing system which uses a cellular phone as a communication terminal (e.g., Japanese Patent Application Laid-Open Publication No. 2001-357337, pages 6 to 7).

The settlement processing system using a cellular phone comprises a settlement processing apparatus which can be connected to a network and carries out a settlement processing. Further, a customer who desires execution of the settlement processing connects his or her cellular phone with the settlement processing apparatus via the network. Thereafter, the customer operates the cellular phone to input information necessary for the settlement processing and transmits the information to the settlement processing apparatus. Further, the settlement processing apparatus executes the settlement processing based on the information.

However, the aforementioned settlement processing using a credit card requires complicated operations such as issuance of a sales slip, affixing customer's signature, and delivery of a copy of the sales slip by hand, leading to a problem that a rapid response is hindered.

A settlement processing system using a cellular phone as described above, further causes a problem that the customer is asked to make complicated operations such as inputting from a cellular phone to execute a settlement processing.

The present invention has a main object of providing a settlement processing apparatus capable of performing an easy settlement processing, a system thereof, a method thereof, a program thereof, and a recording medium which records the program.

A settlement processing apparatus according to the present invention performs a settlement processing for settling a debt issued by a business transaction with a customer, and is characterized by comprising: a customer identification data attaining section which attains customer identification data for identifying the customer; a purchase data attaining section which attains purchase data concerning contents of the debt; a data storage which stores customer-specific data including the customer identification data and specifying the customer; an authentication section which compares the customer identification data attained by the customer identification data attaining section with the customer-specific data stored in the data storage, to authenticate the customer identification data; and a settlement processing section which performs the processing for settling the debt, based on the customer-specific data corresponding to the customer identification data and the attained purchase data, if the authentication section authenticates the customer identification data, and which processes settlement completion data indicating that the processing is completed, after the processing is completed, making the settlement completion data be able to be notified to the customer.

Another settlement processing apparatus according to the present invention performs a settlement processing for settling a debt issued by a business transaction with a customer, and is characterized by comprising: a customer identification data attaining section which attains customer identification data for identifying the customer, from at least one of a communication terminal owned by the customer and capable of transmitting/receiving data, and a checkout terminal which is owned by an organization and generates purchase data concerning contents of the debt, the organization serving the business transaction; a purchase data attaining section which attains the purchase data from at least one of the communication terminal and the checkout terminal; a data storage which stores customer-specific data including the customer identification data and specifying the customer; an authentication section which compares the customer identification data attained by the customer identification data attaining section with the customer-specific data stored in the data storage, to authenticate the customer identification data; and a settlement processing section which performs the processing for settling the debt, based on the customer-specific data corresponding to the customer identification data and the attained purchase data, if the authentication section authenticates the customer identification data.

A settlement processing system according to the present invention performs a settlement processing for settling a debt issued by a business transaction with a customer, and is characterized by comprising: a settlement processing apparatus according to the present invention as described above; a communication terminal owned by the customer and capable of transmitting/receiving data; a checkout terminal which is owned by an organization and generates the purchase data concerning the contents of the debt, the organization serving the business transaction; and a communicator which enables transmission/reception of data among the settlement processing apparatus, the communication terminal, and the checkout terminal.

A settlement processing method according to the present invention is to perform a settlement processing for settling a debt issued by a business transaction with a customer, and is characterized by: attaining customer identification data for identifying the customer, and purchase data concerning contents of the debt; comparing the attained customer identification data with customer-specific data including the customer identification data, which is stored in advance, and specifying the customer, to authenticate the customer identification data; and performing the processing for settling the debt, based on the customer identification data and the attained purchase data, if the customer identification data is authenticated, and settlement completion data indicating that the processing is completed, after the processing is completed, making the settlement completion data be able to be notified to the customer.

Another settlement processing method according to the present invention is to perform a settlement processing for settling a debt issued by a business transaction with a customer, and is characterized by: attaining customer identification data for identifying the customer, from at least one of a communication terminal owned by the customer and capable of transmitting/receiving data, and a checkout terminal which is owned by an organization and generates purchase data concerning contents of the debt, the organization serving the business transaction; attaining the purchase data from at least one of the communication terminal and the checkout terminal; comparing the attained customer identification data with the customer-specific data including the customer identification data, which is stored in advance, and specifying the customer, to authenticate the customer identification data; and performing the processing for settling the debt, based on the authenticated customer identification data and the attained purchase data, if the customer identification data is authenticated.

A settlement processing program according to the present invention is characterized by making a computer execute a settlement processing method according to the present invention as described above.

A recording medium which records a settlement processing program, according to the present invention, is characterized by recording the settlement processing program according to the present invention as described above, in a computer-readable form.

### DESCRIPTION OF THE DRAWINGS

FIG. 1 is a block diagram showing a schematic configuration of a settlement processing system according to the present invention;
FIG. 2 is a diagram showing a schematic configuration of a server as a settlement processing apparatus according to the present invention;
FIG.S. 3A, 3B, 3C, and 3D are tables each showing a data configuration of a database as a data storage according to the present invention;
FIG.. 4 is a flowchart which explains a settlement processing operation in the settlement processing system 1 according to the first embodiment of the present invention;

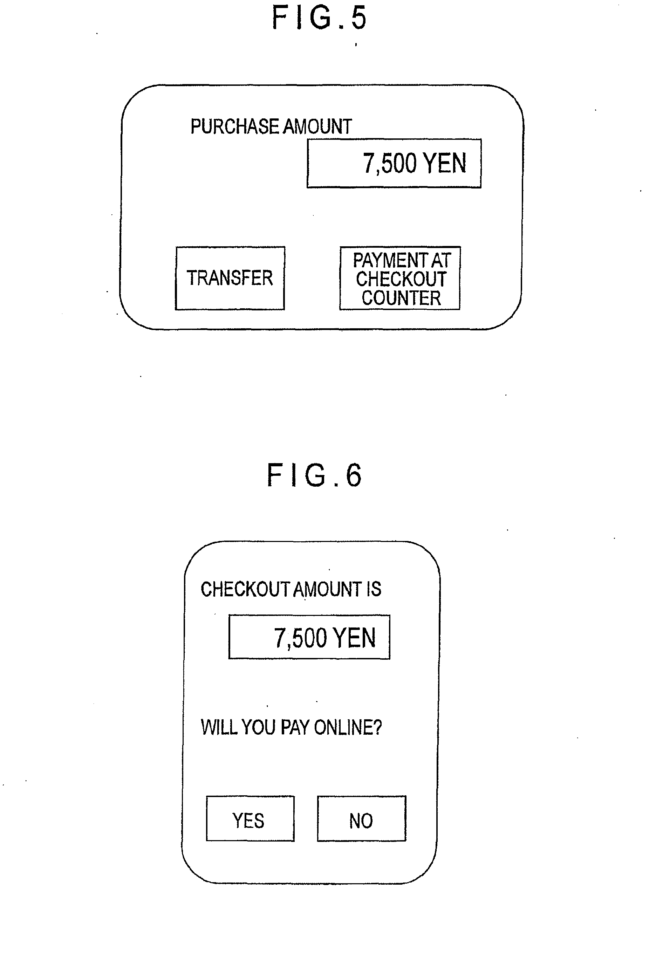

FIG. 5 is a view showing an example of a display which invites a selection of a settlement method on the display device of a POS register according to the first embodiment;
FIG.. 6 is a view showing an example of a display of data displayed on a cellular phone in each of the embodiments of the present invention;
FIG.. 7 is a view showing an example of a display of a settlement completion code displayed on the cellular phone in each of the embodiments;

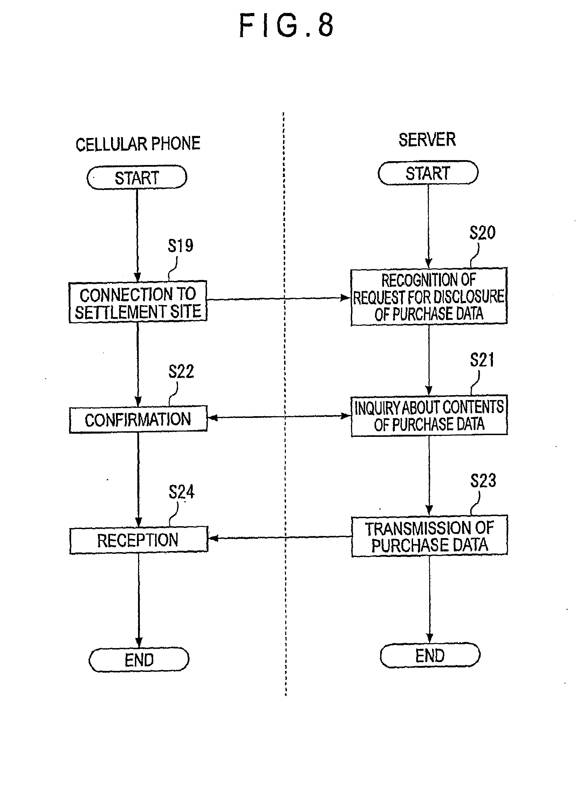

FIG. 8 is a flowchart which explains a processing operation of attaining purchase data of items settlement of which has been completed previously in each of the embodiments;
FIG.. 9 is a view showing an example of a display of purchase data displayed on the cellular phone in each of the embodiments;

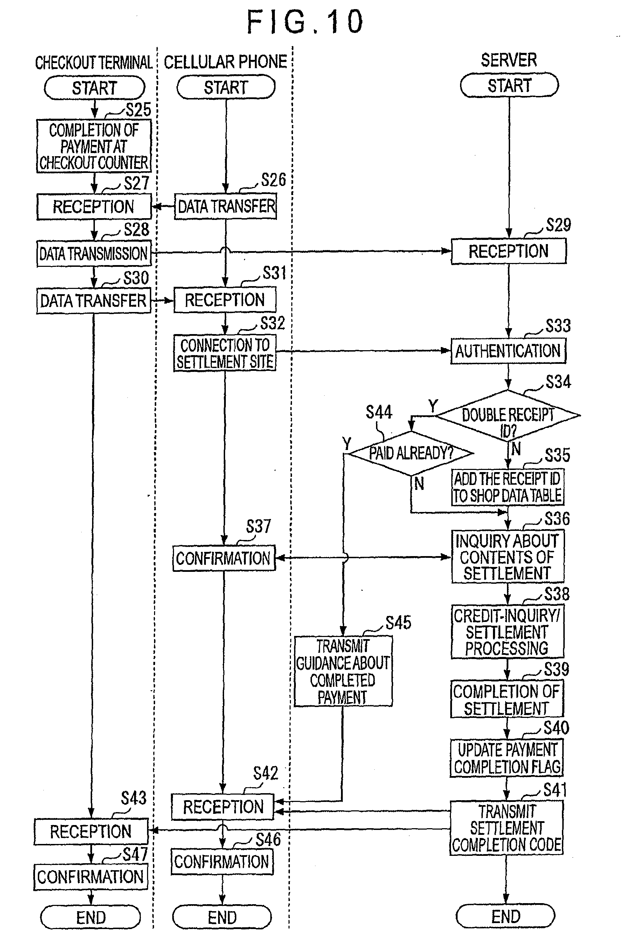

FIG. 10 is a flowchart which explains a settlement processing operation in the settlement processing system according to the second embodiment of the present invention; and
FIG.. 11 is a flowchart which explains a settlement processing operation in the settlement processing system according to the third embodiment of the present invention.

### DETAILED DESCRIPTION

### [First Embodiment]

Hereinafter, an embodiment of the present invention will be described based on the drawings.

### [Configuration of the Settlement Processing System]

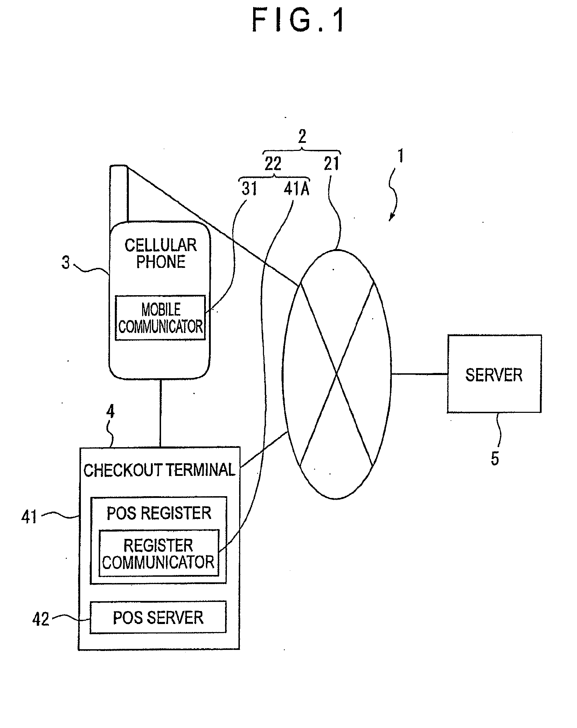

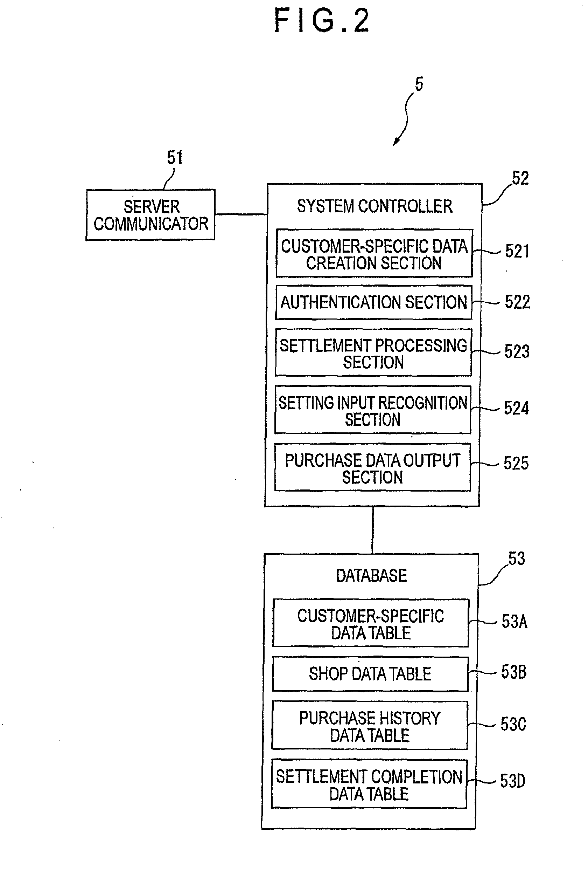

FIG. 1 is a block diagram showing the schematic configuration of the settlement processing system according to the present embodiment of the present invention. FIG. 2 is a block diagram showing the schematic configuration of a server constituting the settlement processing system.

In FIG. 1, the reference numeral 1 denotes a settlement processing system which makes customers settle debts of business transactions of the customers. For example, in this settlement processing system 1, an electronic settlement processing is executed with use of a cellular phone 3 as a communication terminal when a customer pays a bill at a shop such as a restaurant, store, or the like. Further, the settlement processing system 1 comprises a communicator 2, a cellular phone 3, a checkout terminal 4, and a server 5 as a settlement processing apparatus.

The communicator 2 enables transmission/reception of various data among the cellular phone 3, checkout terminal 4, and server 5. The communicator 2 comprises a network 21 and a terminal communicator 22.

The network 21 enables transmission/reception of various data among the server 5, cellular phone 3, and checkout terminal 4. For example, the network 21 is constituted as the Internet or intranet based on general-purpose protocol such as TCP/IP (Transmission Control Protocol/Internet Protocol). As described above, the network 21 is connected to the cellular phone 3, checkout terminal 4, and server 5.

The terminal communicator 22 enables transmission/reception of various data between the cellular phone 3 and checkout terminal 4. The terminal communicator 22 may adopt a wireless transmission system based on electric waves, light, infrared light, Blue tooth, or the like. In place of the wireless transmission system, a cable transmission system such as a coaxial cable may be adopted.

The cellular phone 3 is owned by a customer and comprises a computer body not shown, an internal memory as a communication terminal storage, a display device as a communication terminal notification section, an input device, and the like. The cellular phone 3 also comprises a mobile communicator 31 which constitutes the terminal communicator 22 to transmit/receive various data to/from the checkout terminal 4.

Further, browser software and electronic mail software for browsing homepages on the Internet are installed in the cellular phone 3, so that various data can be transmitted/received via the network 21.

Further, the cellular phone 3 can transmit data stored in the internal memory, via the network 21 or the terminal communicator 22. The internal memory stores device identification data as customer identification data that is data specific to the cellular phone 3, in addition to data received via the network 21 or the terminal communicator 22. For example, the cellular phone number of the cellular phone 3, an electronic mail address, a secret identification code for identifying the owner of the cellular phone, or the like can be adopted as the device identification data. Among them, the cellular phone number and the electronic mail address correspond to residence data.

Note that the communication terminal device is not limited to a cellular phone but may be a mobile terminal such as a PDA (Personal Digital Assistants) or the like. In addition to the mobile terminal, it is possible to adopt a personal computer or the like which can be connected to the network 21.

The checkout terminal 4 is owned by an organization which organizes business transactions and generates purchase data concerning the contents of debts issued from business transactions. For example, the checkout terminal 4 is set in a shop such as a restaurant or store, sums items purchased by customers, and manages shop data concerning the shop. The checkout terminal 4 is constituted by a POS (Point of Sales) system and comprises a POS register 41 and a POS server 42.

The POS register 41 sums up items purchased by every customer and calculates purchase data such as a total purchase amount to charge the customer. Also, the calculated purchase data is outputted to the POS server 42. The POS register 41, for example, comprises an input device not shown, an operation device, and a display device. When items to be purchased is inputted through the input device, the inputted items are summed up by the operation device, to calculate purchase data. The display device displays the purchase data. Further, an attendant of the shop inputs a settlement method (payment by cash, a credit card, or a cellular phone) desired by the customer through the input device. Thus, a settlement method is selected. The configuration may be arranged such that the customer is invited by the display device to select a settlement method when the purchase data is displayed on the display device. At this time, the customer can select a settlement method if the display device has a touch panel or the like.

The purchase data includes a total purchase amount and purchase identification data for identifying the purchase data. Further, the purchase data may include data (item names, prices, quantities, and the like) concerning the items themselves to be purchased by the customer, and supplementary data concerning the purchaseddate and time.

The POS register 41 also comprises a register communicator 41A constituting the terminal communicator 22, to transmit/receive various data to/from the cellular phone 3. That is, the terminal communicator 22 is constituted by the mobile communicator 31 and the register communicator 41A.

Further, data which is received from the cellular phone 3 by the register communicator 41A is outputted to the POS server 42. The register communicator 41A can also transmit connection command data and the like to connect with the server 5 via the network 21, in addition to data generated by the checkout terminal 4. The connection command data is, for example, constituted by a settlement site URL (Universal Resource Locator) of the server 5 and a connection command signal or the like which makes forcedly a connection to the settlement site URL.

The POS server 42 controls the entire checkout terminal 4. For example, if plural POS registers 41 are set, the server 42 attains purchase data calculated by the POS registers 41. The register communicator 41 A of POS registers 41 attains the data received from the cellular phone 3. Further, the server 42 generates shop data, based on either the attained purchase data or the data received via the terminal communicator 22. The server 42 manages the purchase data attained by a storage section not shown as a checkout terminal storage, and the generated shop data. The POS server 42 can appropriately connect the Internet as the network 21 and transmit/receive data via the network 21. The shop data is configured to include the purchase data, the data received by the POS registers 41, and the data concerning the shop, which includes a shop code, shop name, register number, register attendant, and the like. Among the data concerning the shop, the shop code relates to the shop name, location of the shop, and telephone number thereof, and corresponds to the residence data.

Also, the POS server 42 generates and manages not only the shop data but also settlement completion codes as settlement completion data, each of which indicates completion of a processing for settling a debt and specific to the shop data. For example, the POS server 42 connects with the server 5 via the network 21 once a day, and outputs settlement completion codes. The settlement completion codes may be inputted from an input device not shown by a manager of the shop and managed by the POS server 42. The configuration of outputting settlement completion codes once a day may be modified such that a settlement completion code is outputted appropriately when a settlement processing is executed.

The server 5 is constituted as a WWW (World Wide Web) server connected to the network 21. Further, the server 5 attains various data from at least one of the cellular phone 3 and the checkout terminal 4 and executes a settlement processing. As shown in FIG. 2, the server 5 comprises a server communicator 51, a system controller 52, and a database 53 as a data storage.

The server communicator 51 transmits/receives signals to/from the network 21. The server communicator 51 is connected to the system controller 52, outputs the received signals to the system controller 52, and also outputs signals outputted from the system controller 52 to the network 21.

The customer identification data attaining section and the purchase data attaining section according to the present invention correspond to the server communicator 51.

The system controller 52 carries out various processings on data to be transmitted/received to/from the network 21 via the server communicator 51 by executing various programs. The system controller 52 comprises a customer-specific data creation section 521, an authentication section 522, a settlement processing section 523, a setting input recognition section 524, and a purchase data output section 525 as a notification section, as programs developed on the OS (Operating System). Also, the system controller 52 comprises a storage not shown and stores temporarily signals outputted from the server communicator 51, i.e., customer identification data and purchase data.

The customer-specific data creation section 521 attains data outputted from a cellular phone 3, a personal computer, or the like via the network 21 by a user who desires registration. The customer-specific data creation section 521 then creates customer-specific data based on this data. Further, the created customer-specific data is stored into the database 53. This customer-specific data creation section 521 creates, customer-specific data, for example, based on data inputted from the cellular phone 3 or personal computer by the user who desires registration, e.g., the user's name, address, e-mail address, cellular phone number, and credit card number, the expiration date of the card, and the secret identification code which identifies the user. Of the customer-specific data, the user's address, e-mail address, and cellular phone number correspond to the residence data.

The authentication section 522 compares customer identification data (including a cellular phone number, e-mail address, secret identification code, and the like) obtained via the server communicator 51 with customer-specific data stored in the database 53, to authenticate the attained customer identification data.

After the customer identification data is authenticated by the authentication section 522, the settlement processing section 523 carries out a processing to make a customer settle a debt, based on the customer-specific data stored in the database 53, which corresponds to the customer identification data, and the shop data attained via the server communicator 51. After the processing to execute the customer settle the debt is completed, a settlement completion code as a settlement completion data indicating the completion of the processing is displayed on the display device of either the cellular phone 3 or the checkout terminal 4 via the network 21.

Also, the settlement processing section 523 connects appropriately with the cellular phone 3 via the network 21 after a credit inquiry, and displays settlement content data concerning the settlement, on the display device of the cellular phone 3.

Further, the settlement processing section 523 attains shop data via the network 21 from the cellular phone 3 or the checkout terminal 4 before executing the settlement. The section 523 then determines whether the settlement has been already completed, based on the data stored in the database 53. If the settlement has not been completed yet, the settlement processing section 523 outputs the attained shop data to the database 53. At the substantially same time, the settlement processing section 523 starts the settlement processing.

Further, after completing the settlement, the settlement processing section 523 updates a payment-completion flag in a purchase history data table 53C stored in the database 53, which will be described later.

Also, the settlement processing section 523 connects with either the cellular phone 3 or the checkout terminal 4 via the network 21, based on residence data contained in the customer identification data, customer-specific data, and purchase data. Further, the section 523 displays the settlement completion code stored in the database 53, on the display device of either the cellular phone 3 or the checkout terminal 4. At the substantially same time, the settlement processing section 523 transmits the settlement completion code and the purchase identification data which identifies purchase data, to the cellular phone 3 by e-mail, based on the residence data included in the customer identification data and the customer-specific data.

Note that the purchase identification data in addition to the settlement completion code may be displayed on the display device of either the cellular phone 3 or the checkout terminal 4. Further, the purchase data may be displayed. The purchase data in addition to the settlement completion code and the purchase identification data may be transmitted to the cellular phone 3 by e-mail.

As a user makes an input operation of requesting disclosure of purchase data (an input of setting purchase identification data) by a cellular phone 3 or personal computer, the setting input recognition section 524 receives a signal expressing the input operation via the network 21 and recognizes the request for disclosure of purchase data.

After the purchase data disclosure request is recognized by the setting input recognition section 524, the purchase data output section 525 attains inputted purchase identification data. The section 525 then extracts purchase data corresponding to the purchase identification data from the database 53, and outputs, i.e., distributes the purchase data to the cellular phone 3, the personal computer, or the like.

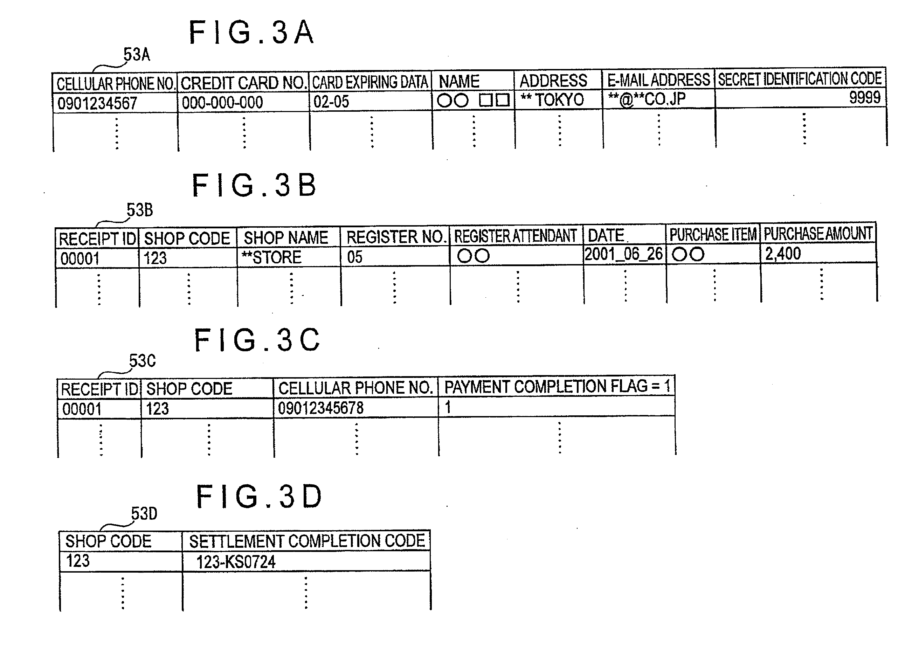

The database 53 has, for example, an optical disk, magnetic disk, or the like and stores data outputted from the system controller 52. The database 53 includes a customer-specific data table 53A, a shop data table 53B, a purchase history data table 53C, and a settlement completion data table 53D. FIGS. 3A, 3B, 3C, and 3D are views each showing a data configuration of the database.

As shown in FIG. 3A, the customer-specific data table 53A has plural items of customer specific data which are created respectively for customers by the customer-specific data creation section 521 in the system controller 52.

The shop data table 53B stores data based on shop data outputted from the settlement processing section 523. That is, as shown in FIG. 3B, the shop data table 53B stores receipt IDs, shop codes, shop names, register numbers, register attendants, dates, purchase items, and total purchase amounts as purchase identification data, associated with each other.

The purchase history data table 53C stores history of purchase made by customers, based on the shop data outputted from the settlement processing section 523. That is, as shown in FIG. 3C, the purchase history data table 53C stores receipt IDs, shop codes, cellular phone numbers, and payment completion flags as settlement completion determination data, associated with each other. Each payment completion flag is updated to 1 when an associated settlement is completed by the settlement processing section 523 of the system controller 52. Alternatively, each payment completion flag is maintained at 0 when an associated settlement is not completed.

As shown in FIG. 3D, the settlement completion data table 53D stores the shop codes and settlement completion codes attained from the checkout terminal 4 via the network 21, associated with each other.

### [Operation of Settlement Processing System]

Next, the operation of the settlement processing system 1 described above will be described with reference to the drawings.

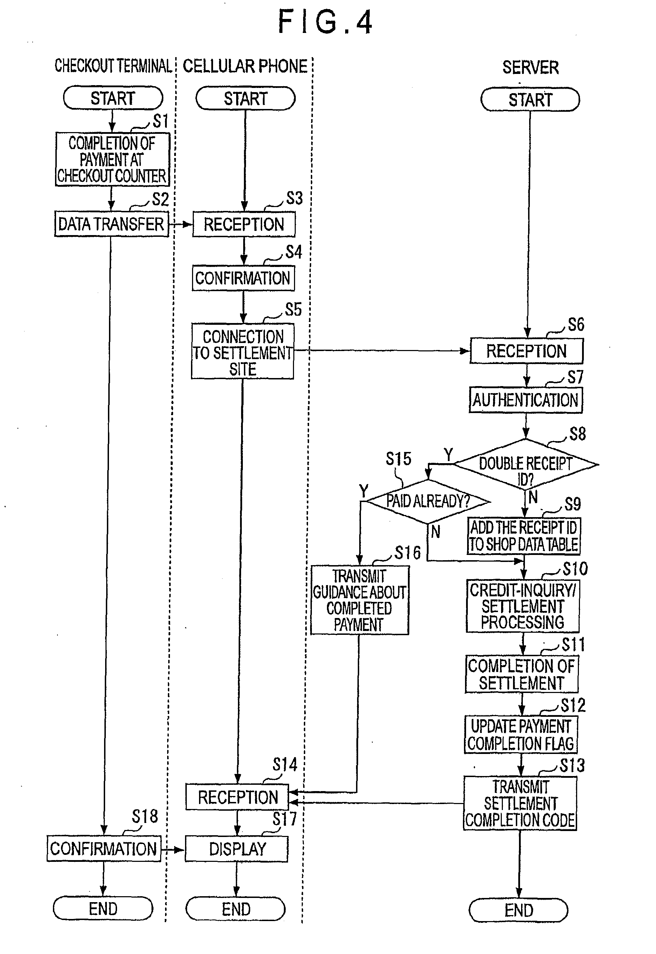

At first, a settlement processing operation in the settlement processing system 1 according to the first embodiment will be described with reference to FIGS. 1 to 4. FIG. 4 is a flowchart for explaining the settlement processing operation in the settlement processing system 1.

In a shop such as an outlet store or the like, a customer brings items to buy to a POS register 41. A shop attendant inputs the items to purchase through an input device such as a bar code reader, ofthe POS register 41. The POS register 41 then sums up the inputted items to calculate purchase data (step S 1). Further, the POS register 41 displays the calculated purchase data, and invites the customer to select a settlement method (settlement by cash, a credit card, or a cellular phone). FIG. 5 is a view showing an example of a display for selection of a settlement method by the display device of the POS register 41. The display device of the POS register 41 displays a total purchase amount as the calculated purchase data, and data which invites selection of a settlement method, as shown in FIG. 5. If the customer or shop attendant thus selects "Transfer" shown in FIG. 5, the selection method based on a cellular phone is selected, and an electronic settlement processing using a cellular phone is started. Alternatively, if the customer or shop attendant selects "Payment at checkout counter", a settlement processing based on cash is started.

If the selection method based on a cellular phone is selected, the POS server 42 generates shop data based on the purchase data calculated by the POS register 41. Further, the POS server 42 transmits the generated shop data and connection command data (URL, a connection command signal) to connect with the server 5, to the mobile communicator 31 of the cellular phone 3 ofthe customer from the register communicator 41 A of the POS register 41 (step S2).

If the terminal communicator 22 adopts the cable transmission system, the mobile communicator 31 and the register communicator 41A of the POS register 41 are connected to each other by a coaxial cable or the like. Alternatively, if the wireless transmission system is adopted, e.g., if infrared data communication is adopted, the mobile communicator 31 is positioned within a communicable range relative to the register communicator 41A of the POS register 41. Alternatively, if the wireless transmission system using Blue tooth is adopted, the customer can communicate even when the cellular phone 3 is kept in a bag or the like.

The cellular phone 3 of the customer receives the shop data and connection command data (the settlement site URL of the server 5, the connection command signal) transmitted in the step S2 by the mobile communicator 31 (step S3). Further, the customer checks the received data on the display device of the cellular phone 3 (step S4). FIG 6 shows an example of displayed data on the cellular phone. As shown in FIG. 6, the display device of the cellular phone 3 displays the total purchase amount as the purchase data included in the received shop data, and the data which invites a final confirmation of the electronic settlement processing using the cellular phone.

After confirming the data received in the step S4, the customer carries out an input operation to decide execution of electronic settlement in response to the final confirmation of the electronic settlement processing, from the input device of the cellular phone 3. Further, the cellular phone 3 recognizes this input operation and connects with the server 5 via the network 21, based on the connection command data received in the step S3 (step S5).

The final confirmation of the electronic settlement processing using a cellular phone in the step S4 may be omitted. After the cellular phone 3 receives data in the step S3, the cellular phone 3 may be forcedly connected to the server 5 via the network 21 in the step S5, based on the connection command data.

If the cellular phone 3 is connected to the server 5 via the network 21 in the step S5, the cellular phone 3 transmits the shop data received in the step S3 and device identification data (a cellular phone number, an e-mail address, secret identification code, and the like) stored in the internal memory of the cellular phone 3, to the server 5. The server 5 receives these data via the server communicator 51 (step S6).

After the data is received in the step S6, the authentication section 522 in the system controller 52 of the server 5 compares the received device identification data with customer-specific data included in the customer-specific data table 53A in the database 53, to authenticate the device identification data (step S7). That is, whether device identification data equal to the received device identification data is included in the customer-specific data table 53A is determined. If it is determined that such equal data is not included, no electronic settlement processing can be carried out but the settlement processing is stopped. When the settlement processing is thus stopped, the server 5 may connect with the customer's cellular phone 3 or the shop's checkout terminal 4 via the network 21, to display an indication of no registration of customer-specific data on the display device of the cellular phone 3 or the checkout terminal 4.

In the step S7, if the authentication section 522 authenticates the device identification data, i.e., if equal device identification data is included in the customer-specific data table 53A in the database 53, the settlement processing section 523 executes a settlement processing. Specifically, the settlement processing is executed as follows.

At first, the settlement processing section 523 determines whether the shop data table 53B stored previously in the database 53 includes receipt ID equal to the receipt ID which is purchase identification data included in the shop data corresponding to the authenticated device identification data (step S8).

If "N (No)" is determined in the step S8, i.e., ifthe received receipt ID is not included in the shop data table 53B stored previously, the settlement processing section 523 outputs the received data to the database 53. Then, data based on the shop data is added to the shop data table 53B in the database 53 (step S9).

After the step S9, the settlement processing section 523 connects with a management server which is operated by a credit card company not shown. Further, the settlement processing section 523 checks validity of the card, based on the customer-specific data (the credit card number, expiration date, and the like) authenticated in the step S7 (credit inquiry). If execution of an electronic settlement processing is not determined to be proper as a result of the credit inquiry, no electronic settlement processing can be executed but the settlement processing is stopped. When the settlement processing is thus stopped, the server 5 may connect with the customer's cellular phone 3 or the shop's checkout terminal 4 via the network 21, to display an indication of no proper validity of the card on the display device of the cellular phone 3 or the checkout terminal 4.

Further, if it is confirmed that an electronic settlement can be executed without problems as a result ofthe credit inquiry, the settlement processing section 523 executes a settlement with respect to the credit card company, based on the customer-specific data of the customer corresponding to the authenticated device identification data, and the shop data including the purchase data and attained via the network 21.

As described above, the credit inquiry and the settlement are executed (step S10), and the processing for settling a debt ends (step S11).

Further, after the processing for settling the debt ends in the step S 11, the settlement processing section 523 updates the payment completion flag to 1, with respect to the data whose settlement is completed, in the purchase history data table 53C in the database 53 (step S12).

After the step S12, the settlement processing section 523 extracts the shop code of the shop data used in the processing for settling the debt, and a settlement completion code associated with the shop code, from the settlement completion data table 53D in the database 53. Further, the settlement processing section 523 transmits this settlement completion code to the cellular phone 3 via the network 21 (step S13). The cellular phone 3 then receives the settlement completion code (step S14).

At the substantially same time in the step S13, the settlement processing section 523 transmits the settlement completion code and the receipt ID to the cellular phone 3 by e-mail, based on the e-mail address as residence data included in the customer-specific data in the database 53. Further, in the step S 14, the cellular phone 3 receives this e-mail. In place of transmitting data by e-mail, for example, data may be sent by a postal mail, based on the address of the customer as residence data included in the customer-specific data.

Returning to the step S8, if "Y (Yes)" is determined, i.e., if the received receipt ID is determined to be included in the shop data table 53B stored previously, the settlement processing section 523 refers to the purchase history data table 53C in the database 53 and determines whether the payment completion flag corresponding to the received receipt ID is 1 (step S15). If "N" is determined, the processing goes to the step S10 and executes a credit-inquiry/settlement processing.

Alternatively, if "Y" is determined in the step S15, i.e., if it is determined that payment has already been completed with respect to the received shop data, the settlement processing section 523 connects with the cellular phone 3 via the network 21 and transmits a signal indicating that payment has already been completed (step S16). The cellular phone 3 receives this signal (step S14).

In the step S13 and the step S 16, the server 5 connects with the cellular phone 3 via the network 21 and transmits predetermined data to the cellular phone 3. The present embodiment, however, is not limited to this. For example, the server 5 may connect with the checkout terminal 4 of the shop via the network 21 and transmit predetermined data to the checkout terminal 4. Alternatively, predetermined data may be transmitted to both of the cellular phone 3 and the checkout terminal 4. In the step S 13, the data to be transmitted is not limited to a settlement completion code but may include a receipt ID and further purchase data and the like.

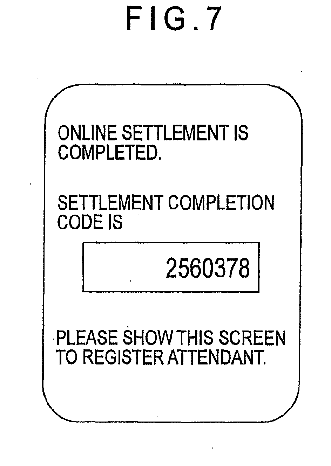

After the step S 14, the cellular phone 3 shows a predetermined display on its display device, based on the settlement completion code transmitted in the step S13 and the signal indicating completion of payment, which has been transmitted in the step S16 (step S 17). FIG. 7 is a view showing an example of a display of a settlement completion code on the cellular phone. As shown in FIG. 7, the cellular phone 3 receives the settlement completion code transmitted in the step S13, and then displays data indicative of completion of the electronic settlement processing, the settlement completion code, and data which invites presentation to the attendant of the shop.

Also, the cellular phone 3 displays, for example, data indicative of completion of payment, data which invites presentation to the attendant of the shop, and the like when the cellular phone 3 receives the signal transmitted in the step S 16 and indicating that payment has already been completed.

Further, in the step S 17, the customer shows the display to the shop attendant, in accordance with the data which is displayed on the display device of the cellular phone 3 and invites presentation of the display to the attendant of the shop. The shop attendant confirms with eyes that a processing for settling a debt has been completed (step S18).

Next, a processing operation using a cellular phone to attain purchase data of an item settlement of which has previously been completed will be described with reference to FIGS. 1 to 4 and FIG. 8. FIG. 8 is a flowchart explaining the processing operation of attaining purchase data of an item settlement of which has previously been completed. The present embodiment is not limited to a cellular phone but a general purpose personal computer may be used.

At first, a user operates the input device of the cellular phone 3 to connect with the server 5 via the network 21, based on connection command data (URL) received in the step S2 (step S19).

After the step S19, the user further operates the input device of the cellular phone 3 to input the receipt ID received in the step S14. Thereafter, the setting input recognition section 524 of the system controller 52 in the server 5 receives a signal based on the receipt ID and recognizes a purchase data disclosure request (step S20).

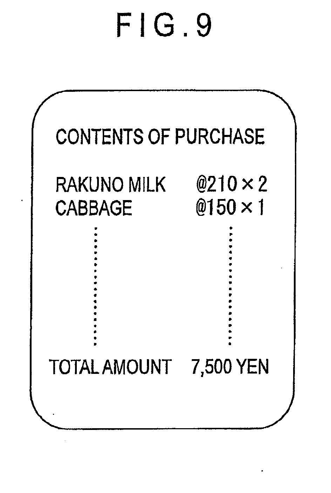

Upon recognition of the purchase data disclosure request in the step S20, the purchase data output section 525 of the system controller 52 in the server 5 attains the inputted receipt ID, and extracts purchase data from the shop data table 53B in the database 53, based on the receipt ID. Further, the section 525 transmits the contents of the extracted purchase data to the cellular phone 3 via the network 21 (step S21) and makes the cellular phone 3 display the contents on the display device of its own. FIG. 9 is a view showing an example of a display of purchase data displayed on the cellular phone 3. As shown in FIG. 9, a total purchase amount, purchased items, prices, and quantities are displayed as purchase data on the display device of the cellular phone 3. The display form is not limited to this but may be such that the date of purchase and the name of the shop where the items are purchased are displayed together with the purchase data.

The user checks the purchase data displayed on the display device of the cellular phone 3 (step S22). If the user confirms that electronic settlement has already been completed with respect to the purchase data, an input operation is performed on the input device of the cellular phone 3 to make the server 5 output, via the network 21, a signal indicating that the user desires transmission of the purchase data.

Based on this signal, the purchase data output section 525 then transmits, via an e-mail, extracted purchase data to the cellular phone 3 at the e-mail address as residence data included in customer-specific data (step S23). The cellular phone 3 then receives the purchase data (step S24). The step S23 is not limited to transmission of e-mail but may be configured to send, via a postal mail, the extracted purchase data at the address of the customer as the residence data.

### [Advantages of the First Embodiment]

(1) The server 5 as the settlement processing apparatus according to the first embodiment is a settlement processing apparatus for performing a settlement processing for settling a debt issued by a business transaction with a customer, and is characterized by comprising: a customer identification data attaining section which attains device identification data as customer identification data for identifying the customer; a purchase data attaining section which attains purchase data concerning contents of the debt; a database 53 as a data storage which stores customer-specific data including the device identification data and specifying the customer; an authentication section 522 which compares the device identification data attained by the customer identification data attaining section with the customer-specific data stored in the database 53, to authenticate the device identification data; and a settlement processing section 523 which performs the processing for settling the debt, based on the customer-specific data corresponding to the device identification data and the attained purchase data, if the authentication section 522 authenticates the device identification data, and which processes settlement completion data indicating that the processing is completed, after the processing is completed, making the settlement completion data be able to be notified to the customer.

In the present embodiment, with respect to a customer who desires registration, the database 53 stores in advance customer-specific data including the device identification data which identifies the customer and specifying the customer. The server communicator 51, which corresponds to the customer identification data attaining section and the purchase data attaining section, attains the device identification data and the purchase data concerning the contents of a debt. The authentication section 522 authenticates the device identification data by comparing the device identification data attained by the server communicator 51 with the customer-specific data stored in the database 53. Thereafter, the settlement processing section 523 performs the processing for settling the debt, based on the customer-specific data corresponding to the device identification data and the attained purchase data, if the authentication section 522 authenticates the device identification data. At the same time, the settlement processing section 523 processes settlement completion data indicating that the processing is completed, after the processing is completed, making the settlement completion data be able to be notified to the customer. As a result of this, when a settlement processing is performed, device identification data and purchase data can be automatically attained, so that the processing for settling a debt can be executed easily. In addition, the customer can recognizes that the processing has been competed after completion of the processing for settling the debt. Accordingly, the processing for settling the debt can be executed easily, and the customer is let recognize the completion of this processing after the processing. The customer thus can recognize the completion of the settlement of the debt without anxieties.

(2) The server 5 according to the first embodiment is characterized in that: the customer identification data attaining section attains the device identification data from at least one of the cellular phone 3 as a communication terminal owned by the customer and capable of transmitting/receiving data, and a checkout terminal 4 which is owned by an organization and generates the purchase data concerning the contents of the debt, the organization serving the business transaction; and the purchase data attaining section attains the purchase data from at least one of the cellular phone 3 and the checkout terminal 4. As a result of this, the server 5 can perform settlement of a debt, based on data attained from at least one of the cellular phone 3 and the checkout terminal 4. That is, it is possible to avoid complicated operations in use of a conventional credit card, and to smoothen more the settlement processing.

(3) The server 5 according to the first embodiment is a settlement processing apparatus for performing a settlement processing for settling a debt issued by a business transaction with a customer, and is characterized by comprising: a customer identification data attaining section which attains device identification data for identifying the customer, from at least one of a cellular phone 3 owned by the customer and capable of transmitting/receiving data, and a checkout terminal 4 which is owned by an organization and generates purchase data concerning contents of the debt, the organization serving the business transaction; a purchase data attaining section which attains the purchase data from at least one of the cellular phone 3 and the checkout terminal 4; a database 53 which stores customer-specific data including the device identification data and specifying the customer; an authentication section 522 which compares the device identification data attained by the customer identification data attaining section with the customer-specific data stored in the database 53, to authenticate the device identification data; and a settlement processing section 523 which performs the processing for settling the debt, based on the customer-specific data corresponding to the device identification data and the attained purchase data, if the authentication section 522 authenticates the device identification data.

In the present embodiment, with respect to a customer who desires registration, the database 53 stores in advance customer-specific data including the device identification data which identifies the customer and specifying the customer. The customer identification data attaining section attains the device identification data from at least one of the cellular phone 3 owned by the customer and capable of transmitting/receiving data, and the checkout terminal 4 which is owned by an organization and generates purchase data concerning contents of the debt, the organization serving the business transaction. Further, the purchase data attaining section attains the purchase data from at least one of the cellular phone 3 and the checkout terminal 4. Further, the authentication section 522 authenticates the device identification data by comparing the device identification data attained by the customer identification data attaining section with the customer-specific data stored in the database 53. Thereafter, the settlement processing section 523 performs the processing for settling the debt, based on the customer-specific data corresponding to the device identification data authenticated by the authentication section 522 and the attained purchase data. As a result of this, when a debt is settled, data is attained automatically from one of the cellular phone 3 and the checkout terminal 4. Therefore, it is possible to avoid complicated operations in use of a conventional credit card, and to perform easily and smoothly the processing for settling the debt.

(4) The server 5 according to the first embodiment is characterized in that; the cellular phone 3 and the checkout terminal 4 can be connected via a terminal communicator 22, enabling transmission/reception of data; the device identification data is data specific to the cellular phone 3; the cellular phone 3 comprises an internal memory as a communication terminal storage which stores the device identification data and the purchase data attained via the terminal communicator 22, with the device identification data and the purchase data associated with each other; and the server communicator 51, which corresponds to the customer identification data attaining section and the purchase data attaining section, attains the device identification data and the purchase data stored in the internal memory of the cellular phone 3.

In the present embodiment, the cellular phone 3 and the POS register 41 of the checkout terminal 4 are connected via the terminal communicator 22, enabling transmission/reception of data. Further, the cellular phone 3 attains the purchase data via the terminal communicator 22, and stores the attained purchase data and the device identification data specific to the cellular phone 3, into the internal memory, with both data associated with each other. Further, the server communicator 51 attains the purchase data and the device identification data stored in the internal memory. As a result of this, the server communicator 51 attains the device identification data and the purchase data, which have been associated in advance by the cellular phone 3. Therefore, the settlement processing can be performed properly. That is, the server communicator 51 attains a pair of device identification data and purchase data. Therefore, it is unnecessary to compare the customer who is going to purchase an item with the contents of the purchase, for example, when these data are attained from another cellular phone, enabling a quick and appropriate settlement processing. In addition, various data is exchanged between the cellular phone and the server, so that electronic settlement of a debt can be performed. Accordingly, the settlement processing can be easily performed.

When executing the electronic settlement processing, the checkout terminal 4 of the shop sums up items to be purchased by the customer and hence generates purchase data. The checkout terminal 4 then displays a total purchase amount and the like as the purchase data, on the display device. Then, the customer checks the purchase data displayed on the display device. The customer's cellular phone 3 attains the purchase data via the terminal communicator 22, and stores the attained purchase data and the device identification data into the internal memory, with both data associated with each other. Further, the server communicator 51 of the server 5 attains the device identification data and the purchase data stored in the internal memory, via the network 21. Further, the authentication section 522 compares the attained device identification data with customer-specific data in the customer-specific data table 53A stored in the database 53, to authenticate the device identification data. Thereafter, the settlement processing section 523 performs the processing for settling the debt, based on the customer-specific data corresponding to the authenticated device identification data and the purchase data. Accordingly, the shop side need not issue a sales slip, unlike the case of settlement using a credit card, or require the customer's signature. Therefore, complicated operations are omitted and conveniences can be enhanced. Meanwhile, the customer side need not sign or make a particularly complicated input operation by the cellular phone 3. That is, both of the shop side and the customer side can avoid complicated operations, so that conveniences can be enhanced.

Upon attaining purchase data via the terminal communicator 22, the cellular phone 3 displays the total purchase amount, purchase items, purchase quantities, and the like as the attained purchase data, on the display device of its own. Therefore, the customer can confirm the total purchase amount, purchase items, purchase quantities, and the like as the attained purchase data, on the display device of the cellular phone 3. Accordingly, the server 5 executes settlement of the debt, based on the purchase data confirmed by the customer. Thus, the shop side can avoid charging the customer a wrong amount, and the customer side can avoid an incorrect charge from the shop side.

Further, since the server 5 executes the settlement processing with use of a generally popular cellular phone 3, use of the present invention can be greatly enhanced. In addition, the cellular phone 3 originally has mechanical data such as a cellular phone number, serial number, or the like in advance. Therefore, new data need not be added to the cellular phone 3 when the settlement processing according to the present embodiment is executed.

(5) The server 5 according to the first embodiment is characterized in that: the device identification data, the customer-specific data, and the purchase data each include residence data concerning residence of at least one of the customer, the cellular phone 3, and the checkout terminal 4; and after completion of the processing for settling the debt, the settlement processing section 523 processes settlement completion data indicating that the processing has been completed, on the basis of the residence data included in attained data, making at least one of the cellular phone 3 and the checkout terminal 4 be able to notify the customer of the settlement completion data. As a result of this, the customer or the shop attendant can recognize the completion of the processing for setting the debt, from the cellular phone 3 or the checkout terminal 4.

After the processing for settling the debt is completed, the settlement processing section 523 connects to the cellular phone 3 via the network 21, and transmits a settlement completion code as the settlement completion data. Further, the cellular phone 3 receives this settlement completion code via the network 21, and makes the display device display the data indicating the completion of the electronic settlement processing, the settlement completion code, and data which invites presentation to the shop attendant. Further, the customer shows the shop attendant the display of the display device ofthe cellular phone 3. The shop attendant then confirms the completion of the electronic settlement processing with eyes. Accordingly, by a simple processing, the customer and the shop attendant can be let recognize completion of the processing for settling a debt.

Also, at the substantially same time when the settlement completion code is transmitted, the settlement processing section 523 transmits the settlement completion code and the receipt ID to the cellular phone 3 by e-mail, based on the e-mail address as residence data included in the customer-specific data in the database 53. Accordingly, even when the settlement completion code cannot be transmitted completely due to interference at the time of the transmission of the settlement completion code described above, the server 5 can let the customer or shop attendant recognize steadily that the settlement of the debt has been completed, based on the residence data.

Further, the settlement completion code as the settlement completion data is generated by the checkout terminal 4 and is updated, for example, once a day. Therefore, the shop side can prevent illegal actions of the customer, by confirming the settlement completion code.

(6) The server 5 according to the first embodiment is characterized in that: the database 53 stores the attained purchase data and a payment completion flag as settlement completion determination data indicating whether the processing for settling the debt on the basis of the attained purchase data has been completed, with the attained purchase data and the payment completion flag associated with each other; and before performing the processing for settling the debt, the settlement processing section 523 determines whether the processing for settling the debt has been completed, on the basis of the payment completion flag corresponding to the purchase data. As a result of this, it is possible to avoid double execution of the electronic settlement processing, and to avoid double payment to one item from one customer.

(7) The server 5 according to the first embodiment is characterized in that, if it is determined that the processing for settling the debt has not yet been completed, the settlement processing section 523 performs the processing for settling the debt, based on the device identification data authenticated by the authentication section 522 and the attained purchase data. As a result, double execution of the electronic settlement processing can be avoided, and the electronic settlement processing can be performed properly.

After the authentication section 522 completes the authentication, the settlement processing section 523 determines whether the shop data table 53B stored in advance in the database 53 includes receipt ID equal to the receipt ID as the purchase data identification data of the received data. If both are equal receipt ID, the settlement processing section 523 refers to the purchase history data table 53C in the database 53, and determines whether the payment completion flag corresponding to the received receipt ID is 1. Alternatively, if both are not equal receipt ID or if the payment completion flag is 0, the settlement processing section 523 performs the processing for settling the debt. Further, after the processing for settling the debt is completed, the settlement processing section 523 updates the payment completion flag of the data in the purchase history data table 53C to 1, with respect to the settlement which is completed. At the same time, the settlement processing section 523 connects to the cellular phone 3 via the network 21 and transmits a settlement completion code. Therefore, in the server 5, if any trouble occurs before completion of the processing for settling the debt and transmission of a settlement completion code cannot be completed, or if transmission of a settlement completion code is tried and cannot be completed due to interference, the processing can be executed rapidly and double execution of settlement can be avoided, even when data is received again via the network 21. Alternatively, if data is received in a wrong manner via the network 21, it is possible to make a rapid response similarly and to avoid double execution of settlement.

(8) The server 5 according to the first embodiment is characterized by comprising: a setting input recognition section 524 which recognizes a setting input requesting disclosure of the purchase data by an input operation; and a purchase data output section 525 as a notification section which outputs the purchase data, making the customer be able to recognize the purchase data, if the setting input is recognized by the setting input recognition section 524. As a result of this, the customer appropriately attains purchase data which serves as a receipt even though the customer does not receive a receipt unlike the case of normal settlement of a debt by a credit card or cash after completion of settlement. By thus attaining the purchase data, receipts can be managed easily and can appropriately be compared with debit notes sent from credit card companies, to check illegal debit notes and mixed incorrect debit notes.

After completion of the settlement of the debt, the server 5 makes the display device of the cellular phone 3 display the settlement completion code and the receipt ID via the network 21. The server 5 also transmits the settlement completion code and the receipt ID to the cellular phone 3 by e-mail. Therefore, if the customer uses the cellular phone 3 or a personal computer connectible to the network 21 to access the server 5 and then inputs the receipt ID attained as described above, the customer can easily attain purchase data by the cellular phone 3 or the personal computer.

(9) The settlement processing system 1 according to the first embodiment is a settlement processing system which performs a settlement processing for settling a debt issued by a business transaction with a customer, and is characterized by comprising: the server 5; a cellular phone 3 owned by the customer and capable of transmitting/receiving data; a checkout terminal 4 which is owned by an organization and generates the purchase data concerning the contents of the debt, the organization serving the business transaction; and a communicator 2 which enables transmission/reception of data among the server 5, the cellular phone 3, and the checkout terminal 4. As a result of this, the settlement processing can be performed easily and smoothly even in case where the cellular phone 3, checkout terminal 4, and server 5 are provided at remote positions.

(10) The settlement processing system 1 according to the first embodiment is characterized in that: the checkout terminal 4 can output, to the cellular phone 3 via the communicator 2, connection command data for connecting the cellular phone 3 to the server 5, enabling transmission/reception of data; and the cellular phone 3 connects to the server 5 via the communicator 2, upon receipt of the connection command data.

Further, in the present embodiment, the checkout terminal 4 outputs the connection command data to the cellular phone 3 via the communicator 2. Further, the cellular phone 3 connects to the server 5 via the communicator 2 upon receipt of the connection command data. As a result of this, the customer can connect to the server 5 without making an input operation by the input device of the cellular phone 3.

When the settlement processing is performed, the checkout terminal 4 and the cellular phone 3 are connected via the terminal communicator 22, enabling transmission/reception of data. Further, the checkout terminal 4 outputs, to the cellular phone 3 via the terminal communicator 22, the connection command data (the settlement site URL of the server 5, a connection command signal) for connecting to the server 5, together with a total purchase amount, purchase items, and purchase quantities as purchase data. Thereafter, the customer confirms the purchase data from the display device of the cellular phone 3, and selects execution of an electronic settlement processing. The cellular phone 3 then is connected to the server 5, based on the connection command data. Therefore, the customer can connect to the server 5 without manually inputting the settlement site URL of the server 5, so that the settlement processing can be performed easily and smoothly.

(11) The settlement processing system 1 according to the first embodiment is characterized in that the communicator 2 is a network 21. As a result of this, the server 5 can connect to plural checkout terminals 4 or cellular phones 3, which are provided at remote positions, via the network 21. Accordingly, the settlement processing can be performed smoothly, and conveniences can be enhanced greatly.

(12) The settlement processing program according to the first embodiment is characterized in that a computer is made execute the settlement processing method. As a result of this, use of the present invention can be greatly promoted by using a general-purpose computer.

(13) The recording medium according to the first embodiment is characterized in that the settlement processing program is recorded in a computer-readable form. As a result of this, the settlement processing program for executing the settlement processing method is recorded on the recording medium. Therefore, handling of the program is easy and use of the present invention can be promoted greatly.

### [Second Embodiment]

Next, the second embodiment of the present invention will be described. In the following description, the same structural components and the same members as those of the first embodiment will be denoted at identical reference symbols. Detailed description thereof will be omitted or simplified.

In the first embodiment, the server 5 performs a processing for settling a debt, based on data attained from the cellular phone 3 via the network 21.

In contrast, in the second embodiment, the server 5 performs a processing for settling a debt, based on data attained from both of the cellular phone 3 and the checkout terminal 4 via the network 21.

Specifically, FIG. 10 is a flowchart explaining a settlement processing operation in the settlement processing system according to the second embodiment.

Like the step S1 in the first embodiment, a customer brings items to purchase to a POS register 41. The POS register 41 then sums up the items to purchase and calculates purchase data (step S25).

After the step S25, the customer operates the input device of the cellular phone 3 and transmits device identification data stored in the internal memory of the cellular phone 3, to the POS register 41 via the terminal communicator 22 (step S26). Further, the POS register 41 receives the device identification data via the terminal communicator 22 (step S27).

The configuration may be arranged such that the device identification data received from the POS register 41 is transmitted inversely to the cellular phone 3 after the step S27 so that the customer can check the data by the cellular phone 3.

The POS server 42 attains the purchase data calculated by the POS register 41 in the step S25 and the device identification data received by the POS register 41 via the terminal communicator 22 in the step S27. Further, the POS server 42 associates the attained purchase data and device identification data with each other, and generates shop data. Further, the POS server 42 connects with the server 5 via the network 21 and transmits the generated shop data (step S28). The server 5 receives the shop data via the server communicator 51 (step S29).

Also, the POS server 42 transmits connection command data (the settlement site URL of the server 5, a connection command signal) from the register communicator 41A of the POS register 41 to the cellular phone 3 (step S30). The cellular phone 3 receives the connection command data via the mobile communicator 31 (step S31).

The cellular phone 3 receives the connection command data in the step S31, and then forcedly connects with the server 5 via the network 21, based on the connection command data (step S32). Further, the cellular phone 3 transmits the device identification data stored in the internal memory to the server 5 via the network 21. The server 5 receives the device identification data via the server communicator 51.

The authentication section 522 of the server device 5 determines whether the device identification data transmitted from the cellular phone 3 is equal to the device identification data included in the shop data received in the step S29. If they are determined to be equal, the authentication section 522 associates the shop data received in the step S29 with the device identification data received from the cellular phone 3 via the network 21. Thereafter, the device identification data is compared with the customer-specific data included in the customer-specific data table 53A in the database 53; to authenticate the device identification data (step S33). If the device identification data transmitted from the cellular phone 3 is not determined to be equal to the device identification data included in the shop data received in the step S29, the electronic settlement processing is stopped.

The configuration may otherwise be arranged such that, if they are not determined to be equal, reception of equal device identification data from another cellular phone 3 is waited for. Alternatively, reception of equal device identification data may be waited for a predetermined time period. Also, the configuration may be arranged such that, if the device identification data cannot be authenticated as a result of comparison with the customer-specific data, the server 5 connects with the cellular phone 3 of the customer or the checkout terminal 4 of the shop via the network 21 and displays an indication of no registration of the customer-specific data, on the display device of the phone 3 or the terminal 4, like the first embodiment.

In the step S33, if the received device identification data is authenticated, the settlement processing section 523 performs a settlement processing like the first embodiment. Specifically, the settlement processing is performed as follows.

At first, the settlement processing section 523 makes a determination on overlapping of the receipt ID as purchase data identification data included in the shop data corresponding to the authenticated device identification data, like the step S8 in the first embodiment (step S34). Further, if "N (No)" is determined in the step S34, the settlement processing section 523 adds data to the shop data table 53B like the step S9 in the first embodiment (step S35).

Further, the settlement processing section 523 connects with the cellular phone 3 via the network 21, and transmits data concerning the contents to be settled, e.g., the purchase data (the total purchase amount) among the received shop data, to the cellular phone 3. Also, the section 523 displays the purchase data on the display device of the cellular phone 3 (step S36). An example of a display of the purchase data on the cellular phone 3 will be the display form as shown in FIG. 6 mentioned previously.

The customer checks the purchase data displayed on the display device of the cellular phone 3, and selects whether an electronic settlement processing using the cellular phone 3 should be executed (step S37). That is, the step S37 is the customer's final confirmation about whether an electronic settlement processing should be executed. If the customer selects execution of no electronic settlement processing, the electronic settlement processing is stopped.

Alternatively, if execution of an electronic settlement processing is selected, a signal indicative of the execution is transmitted to the server 5 via the network 21. The settlement processing section 523 performs a credit-inquiry/settlement, based on the shop data associated by the authentication section 522 and the customer-specific data corresponding to the device identification data (step S38), like the steps S10 and S11 in the first embodiment. Then, the section 522 finishes the processing for settling a debt (step S39).

Further, the settlement processing section 523 updates the payment completion flag (step S40), like the step S12 in the first embodiment.

After the step S40, the settlement processing section 523 extracts the shop code of the shop data used in the processing for settling the debt, and a settlement completion code associated with the shop code, from the settlement completion data table 53D in the database 53. Further, the settlement processing section 523 connects with the cellular phone 3 and the checkout terminal 4 via the network 21. Also, the settlement processing section 523 transmits this settlement completion code to both of the cellular phone 3 and the checkout terminal 4 (step S41). The cellular phone 3 then receives the settlement completion code (step S42). The checkout terminal 4 receives the settlement completion code (step S43).

Also in the step S41, the settlement processing section 523 transmits the settlement completion code and a receipt ID to the cellular phone 3 by e-mail, based on the e-mail address as residence data included in the customer-specific data in the database 53. Further, in the step S42, the cellular phone 3 receives this e-mail. The present embodiment is not limited to the transmission of data by e-mail but may be configured such that, for example, data is sent by a postal mail, based on the address of the customer as residence data included in the customer-specific data.

Alternatively, if "Y" is determined in the step S34, a determination is made about the payment completion flag (step S44), like the step S15 in the first embodiment. If "N" is determined here, the processing goes to the step S36 and executes a comparison of the contents of the settlement.

Alternatively, if "Y" is determined in the step S44, i.e., if it is determined that payment has already been completed with respect to the received shop data, the settlement processing section 523 connects with the cellular phone 3 via the network 21 and transmits a signal indicating that payment has already been completed (step S45). The cellular phone 3 receives this signal (step S42). The settlement processing section 523 may be configured to connect both of the cellular phone 3 and the checkout terminal 4 via the network 21 and transmit the signal indicative of the completion of payment, in the step S45.

After the step S42, the cellular phone 3 and the POS register 41 show a predetermined display on their display devices, based on the settlement completion code transmitted in the step S41 and the signal indicative of the completion of payment, which has been transmitted in the step S45. From the display on the display device of the cellular phone 3, the customer then confirms that the processing for settling a debt has been completed or that settlement of the items has been completed (step S46). From the display on the display device of the checkout terminal 4, the shop attendant also confirms that the processing for settling a debt has been completed or that settlement of the items has been completed (step S47).

The processing operation according to the second embodiment of attaining purchase data of the items, settlement of which has been previously completed, can be performed in the substantially same manner as the first embodiment, and explanation thereof will be omitted.

### [Advantages of the Second Embodiment]

In the settlement processing system 1 according to the second embodiment described above, the following advantages can be attained in addition to the same advantages as described in the articles (1) to (3) and (6) to (13) of the first embodiment.

(14) A server 5 according to the second embodiment is characterized in that: the customer identification data is data specific to the cellular phone 3; the cellular phone 3 comprises an internal memory which stores the device identification data; the customer identification data attaining section attains the device identification data stored in the internal memory of the cellular phone 3; and the purchase data attaining section attains the purchase data from the checkout terminal 4.

In the present embodiment, the server communicator 51 as the customer identification data attaining section attains the device identification data specific to the cellular phone 3, which is stored in the internal memory of the cellular phone 3. Further, the server communicator 51 attains purchase data from the checkout terminal 4. As a result of this, the server communicator 51 attains the device identification data specific to the cellular phone 3 and the purchase data generated by the checkout terminal 4, from both of the cellular phone 3 and the checkout terminal 4. Therefore, the device identification data and the purchase data can be attained rapidly, so that the settlement processing can be performed smoothly.

In addition, since the server 5 utilizes a generally popular cellular phone 3 to execute the settlement processing, use of the present invention can be greatly enhanced. Further, the cellular phone 3 originally has mechanical data such as a cellular phone number, serial number, or the like in advance. Therefore, new data need not be added to the cellular phone 3 when the settlement processing according to the present embodiment is executed.

(15) The server 5 according to the second embodiment is characterized in that: the cellular phone 3 and the checkout terminal 4 can be connected via a terminal communicator 22, enabling transmission/reception of data; the checkout terminal 4 comprises a database as a checkout terminal storage which stores the purchase data and the device identification data attained via the terminal communicator 22, with the purchase data and the device identification data associated with each other; the purchase data attaining section attains the purchase data stored in the database of the checkout terminal 4, and attains the device identification data; the authentication section 522 determines whether the device identification data attained from the database of the checkout terminal 4 by the purchase data attaining section is equal to the device identification data attained from the internal memory of the cellular phone 3 by the customer identification data attaining section, and if both are determined to be equal, the authentication section 522 associates the device identification data attained by the customer identification data attaining section with the purchase data attained by the purchase data attaining section, and compares the device identification data with the customer specific data, to authenticate the device identification data; and if the device identification data is authenticated by the authentication section 522, the settlement processing section 523 performs the processing for settling the debt, based on the purchase data associated by the authentication section 522 and the customer-specific data corresponding to the device identification data.

Further, in the present embodiment, the cellular phone 3 and the checkout terminal 4 are connected via the terminal communicator 22, enabling transmission/reception of data. The checkout terminal 4 attains the device identification data via the terminal communicator 22, and stores the attained device identification data and purchase data into the database, associated with each other. Further, the purchase data attaining section attains the purchase data stored in the database of the checkout terminal 4, and also attains the device identification data. Further, the authentication section 522 determines whether the device identification data attained from the database of the checkout terminal 4 by the purchase data attaining section is equal to the device identification data attained from the internal memory of the cellular phone 3 by the customer identification data attaining section. If both are then determined to be equal, the authentication section 522 associates the device identification data attained by the customer identification data attaining section with the purchase data attained by the purchase data attaining section, and compares the device identification data with the customer specific data, to authenticate the device identification data. Thereafter, the settlement processing section 523 performs the processing for settling the debt, based on the purchase data associated by the authentication section 522 and the customer-specific data corresponding to the device identification data. As a result of this, association between the device identification data and the purchase data to be attained can be easily achieved while performing a rapid settlement processing of attaining each of the device identification data and the purchase data from both of the cellular phone 3 and the checkout terminal 4. Accordingly, settlement can be executed properly. That is, even in case where the server 5 attains data from plural cellular phones 3 and plural checkout terminals 4, the customer who purchases items and the contents of the purchase can be matched correctly with each other, so that correct settlement can be executed.

The checkout terminal 4 generates shop data, based on the device identification data attained via the terminal communicator 22 and calculated purchase data. Further, the server 5 receives the device identification data from the cellular phone 3 as well as the shop data from the checkout terminal 4, via the server communicator 51. Further, the authentication section 522 determines whether the device identification data included in the received shop data is equal to the device identification data attained from the cellular phone 3. If both are determined to be equal, the authentication section 522 further associates the shop data with the device identification data. Then, the settlement processing section 523 performs the processing for settling a debt, based on the shop data associated by the authentication section 522 and the customer-specific data corresponding to the device identification data. Accordingly, proper settlement can be executed only by comparing the shop data received from the checkout terminal 4 with the device identification data received from the cellular phone 3.

(16) The server 5 according to the second embodiment is characterized in that: the device identification data, the customer-specific data, and the purchase data each include residence data concerning residence of at least one of the customer, the cellular phone 3, and the checkout terminal 4; and before performing the processing for settling the debt, the settlement processing section 523 processes settlement content data concerning contents of settlement of the debt, on the basis of the residence data included in attained data, making at least one of the cellular phone 3 and the checkout terminal 4 be able to notify the customer of the settlement content data. As a result of this, the customer can confirm the settlement content data from the cellular phone 3 or the checkout terminal 4 before executing the processing for settling the debt.

Adopted as the settlement content data may be a total purchase amount, purchase items, purchase quantities, and the like, as purchase data calculated by the checkout terminal 4. Therefore, if the customer confirms the settlement content data, settlement based on the confirmed settlement content data is executed. The shop side can thus avoid incorrect charging to the customer, and the customer side can avoid wrong charging from the shop.

### [Third Embodiment]

Next, the third embodiment of the present invention will be described. In the following description, the same structural components and the same members as those of the first and second embodiments will be denoted at identical reference symbols. Detailed description thereof will be omitted or simplified.

In the second embodiment, the authentication section 522 in the server 5 associates the device identification data received from the cellular phone 3 with the shop data received from the checkout terminal 4, depending on whether the device identification data received from the cellular phone 3 and the device identification data included in the shop data are equal to each other.

In contrast, in the third embodiment, the server 5 receives, from the cellular phone 3, receipt ID as purchase identification data included in purchase data generated by the checkout terminal 4. Thereafter, the authentication section 522 of the server 5 determines whether the receipt ID received from the cellular phone 3 is equal to receipt ID included in shop data received from the checkout terminal 4. If they are equal, the authentication section 522 associates device identification data received from the cellular phone 3 with the shop data received from the checkout terminal 4.

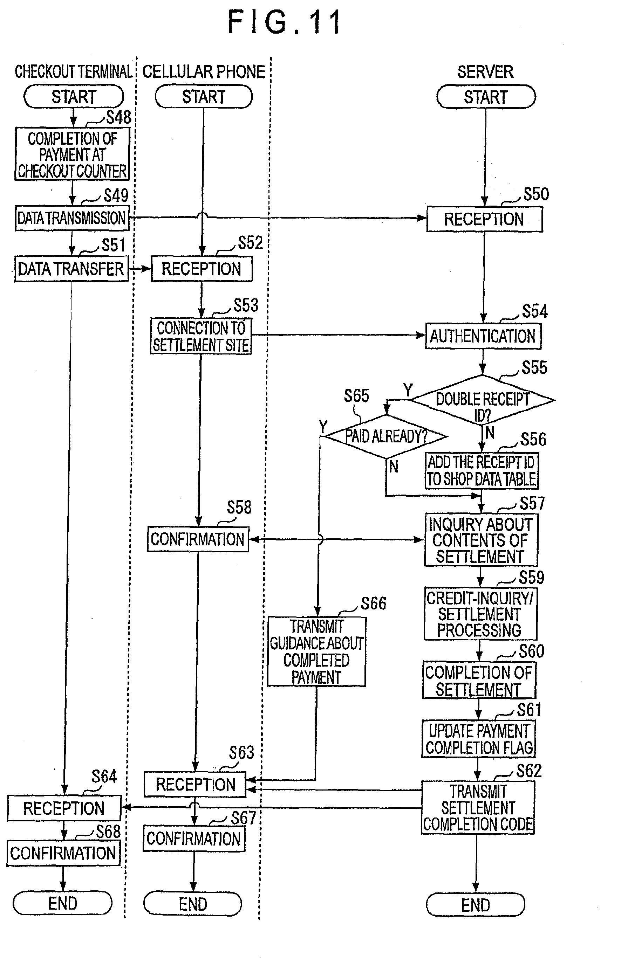

Specifically, FIG. 11 is a flowchart which explains a settlement processing operation in the settlement processing system according to the third embodiment.

Like the step S25 in the second embodiment, the POS register 41 sums up items purchased by a customer and calculates purchase data (step S48).

The POS server 42 attains the purchase data calculated in the step S48. Further, the POS server 42 associates the attained purchase data with data concerning the shop, to generate shop data. Thereafter, the POS server 42 connects with the server 5 via the network 21 and transmits the generated shop data to the server 5 (step S49); Further, the server 5 receives the shop data via the server communicator 51 (step S50).

Also, the POS server 42 transmits receipt ID as purchase identification data included in the shop data and connection command data (the settlement site URL of the server 5, a connection command signal) from the register communicator 41A of the POS register 41 to the cellular phone 3 (step S51). Further, the cellular phone 3 receives the receipt ID and the connection command data via the mobile communicator 31 (step S52). Thereafter, the cellular phone 3 associates the received receipt ID with the device identification data and stores them into the internal memory not shown.

The cellular phone 3 receives data in the step S52, and then connects forcedly with the server 5 via the network 21, based on the received connection command data (step S53). Further, the cellular phone 3 transmits the device identification data and the receipt ID, which are stored in the internal memory, to the server 5 via the network 21.

The authentication section 522 in the server 5 determines whether the receipt ID transmitted from the cellular phone 3 is equal to the receipt ID included in the shop data received in the step S50. If they are determined to be equal, the authentication section 522 associates the device identification data, which corresponds to the receipt ID and is received from the cellular phone 3 via the network 21, with the shop data received in the step S50. Thereafter, the device identification data and the customer-specific data included in the customer-specific data table 53A in the database 53 are compared with each other to authenticate the device identification data (step S33). Alternatively, if the receipt ID transmitted from the cellular phone 3 and the receipt ID included in the shop data received in the step S50 are determined to be not equal, the electronic settlement processing is stopped.

The configuration may otherwise be arranged such that, if they are not determined to be equal receipt ID, reception of equal receipt ID from another cellular phone is waited for. Otherwise, reception of equal receipt ID may be waited for a predetermined time period. Alternatively, the server 5 may be configured to connect with the customer's cellular phone 3 or the shop's checkout terminal 4 via the network 21 and make the display of the phone or terminal an indication of no registration of customer-specific data, if the device identification data and the customer-specific data are compared with each other to result in no authentication, like the first and second embodiments.

The settlement processing operation (steps S55 to S68) after the authentication corresponds to the steps S34 to S47 in the second embodiment, and explanation thereof will be omitted.

In the third embodiment, the processing operation of attaining purchase data of items, settlement of which has been previously completed, can be performed in the substantially same manner as the first embodiment, and explanation thereof will be omitted.

### [Advantages of the Third Embodiment]

In the settlement processing system 1 according to the third embodiment described above, the advantages described below can be attained in addition to the same advantages as described in the articles (1 ) to (3) and (6) to (13) of the first embodiment and the articles (14) and (16) of the second embodiment.

(17) The server 5 according to the third embodiment described above is characterized in that: the cellular phone 3 and the checkout terminal 4 can be connected via a terminal communicator 22, enabling transmission/reception of data; the purchase data includes receipt ID which identifies the purchase data; the internal memory of the cellular phone 3 stores the device identification data and the purchase identification data attained via the terminal communicator 22, with the device identification data and the purchase identification data associated with each other; the customer identification data attaining section attains the device identification data stored in the internal memory of the cellular phone 3, and also attains the receipt ID; the authentication section 522 determines whether the receipt ID attained from the internal memory of the cellular phone 3 by the customer identification data attaining section is equal to the receipt ID included in the purchase data attained from the checkout terminal 4 by the purchase data attaining section, and if both are determined to be equal, the authentication section 522 associates the device identification data attained by the customer identification data attaining section with the purchase data attained by the purchase data attaining section, and compares the device identification data with the customer-specific data, to authenticate the device identification data; and if the device identification data is authenticated by the authentication section 522, the settlement processing section 523 performs the processing for settling the debt, based on the purchase data associated by the authentication section 522 and the customer-specific data corresponding to the device identification data.

Further, in the present embodiment, the cellular phone 3 and the checkout terminal 4 are connected via the terminal communicator 22, enabling transmission/reception of data. The cellular phone 3 attains the receipt ID included in the purchase data generated by the purchase identification data from the checkout terminal via the terminal communicator 22. Further, the cellular phone 3 stores the attained receipt ID and the device identification data into the internal memory, associated with each other. Then, the customer identification data attaining section attains the device identification data stored in the internal memory of the cellular phone 3, and also attains the receipt ID. Thereafter, the authentication section 522 determines whether the receipt ID attained from the internal memory of the cellular phone 3 by the customer identification data attaining section is equal to the receipt ID included in the purchase data attained from the checkout terminal 4 by the purchase data attaining section. If both are then determined to be equal, the authentication section 522 associates the device identification data attained by the customer identification data attaining section with the purchase data attained by the purchase data attaining section. Further, the authentication section 522 also compares the device identification data with the customer-specific data, to authenticate the device identification data. Thereafter, the settlement processing section 523 performs the processing for settling the debt, based on the purchase data associated by the authentication section 522 and the customer-specific data corresponding to the device identification data. As a result of this, association between the device identification data and the purchase data to be attained can be easily achieved while performing a rapid settlement processing of attaining each of the device identification data and the purchase data from both of the cellular phone 3 and the checkout terminal 4. Accordingly, settlement can be executed properly. In addition, the checkout terminal 4 can enter into execution of settlement without waiting for the device identification data outputted from the cellular phone 3, so that the settlement processing can be performed more rapidly.

The cellular phone 3 stores the receipt ID and the device identification data attained via the terminal communicator 22 into the internal memory, associated with each other. Also, the checkout terminal 4 generates shop data, by associating calculated purchase data with data concerning the shop. Further, the server 5 receives the device identification data and the receipt ID from the cellular phone 3, and receives the shop data from the checkout terminal 4, via the server communicator 51. Further, the authentication section 522 also determines whether the receipt ID received from the cellular phone 3 is equal to the receipt ID included in the shop data received from the checkout terminal 4. If both are determined to be equal, the authentication section 522 associates the shop data with the device identification data. Further, the settlement processing section 523 performs the processing for settling a debt, based on the shop data associated by the authentication section 522 and the customer-specific data corresponding to the device identification data. Therefore, proper settlement can be executed rapidly only by comparing the shop data received from the checkout terminal 4 with the receipt ID received from the cellular phone 3. In addition, the size of data outputted to the server 5 from each of the POS register 41 and the cellular phone 3 can be reduced to be small. Accordingly, the communication speed is improved and the communication costs are reduced.

### [Modifications of the Embodiments]

The present invention has been described above with reference to preferred embodiments. The present invention is not limited to these embodiments but various modifications and design changes are possible without deviating from the scope of the invention.

Described in the above embodiments is a configuration in which the server 5 attains data from the cellular phone 3 and the checkout terminal 4. The present invention, however, is not limited to this. For example, data may be attained not only from the cellular phone 3 but also from a general-purpose personal computer. In this configuration, data can be attained from various devices so that use fields of the present invention can be expanded.

Also described in the above embodiments is a configuration in which, after completion of a processing, the server 5 makes at least one of the cellular phone 3 and the checkout terminal 4 display an indication of the completion of the processing. The present invention, however, is not limited to this. It suffices that the configuration is arranged to give a notification to the customer, e.g., the configuration may be arranged such that the cellular phone 3 or the checkout terminal 4 is let output an indication of the completion of the processing as a voice.

In the first embodiment described above, a description is made of a configuration in which the server 5 receives, via the network 21, both of the device identification data and the purchase data stored in the internal memory of the cellular phone 3. The present invention, however, is not limited to this but may adopt the following configuration.

For example, the server 5 may comprise a storage for storing device identification data and purchase data received from the internal memory of the cellular phone 3 via the network 21. Thus, the server 5 receives the device identification data and the purchase data from the internal memory of the cellular phone 3 via the network 21 and stores these data into the storage. Then, the server 5 further receives receipt ID included in the purchase data from the checkout terminal 4. Further, the authentication section 522 receives the receipt ID, and the authentication section 522 then determines whether the received receipt ID is equal to the receipt ID included in the purchase data stored in the storage. If they are determined to be equal, the authentication section 522 compares the device identification data corresponding to the receipt ID and stored in the storage with the customer-specific data, to authenticate the device identification data. Thereafter, the settlement processing section 523 performs a processing for settling a debt, based on the purchase data stored in the storage and the customer-specific data corresponding to the device identification data. In this configuration, the server 5 attains the device identification data and the purchase data, which have previously been associated with each other by the cellular phone 3, and properly performs the settlement processing. Also, the server 5 receives, from the checkout terminal 4 of a shop, data concerning the data received from the cellular phone 3. Therefore, it is possible to prevent the customer side from operating the cellular phone 3 to make an illegal action.

Alternatively, for example, the checkout terminal 4 may comprise an input section for inputting device identification data, and a database for storing the device identification data inputted by the input section, associated with purchase data. In this case, the server 5 attains the device identification data and purchase data stored in the database of the checkout terminal 4. In this configuration, the server 5 attains the device identification data and the purchase data previously associated with each other by the checkout terminal 4, so that the settlement processing can be performed properly. In addition, since the input section for inputting the device identification data is comprised, the terminal communicator 22 which connects the checkout terminal 4 to the cellular phone 3, enabling transmission/reception of data, is not necessary any more. The checkout terminal 4 can be downsized as a result.

In the above configuration in which the server 5 receives the device identification data and the purchase data from the checkout terminal 4, the following configuration may be adopted.

For example, the server 5 may comprise a storage for storing device identification data and purchase data attained from the database of the checkout terminal 4. Thus, the server 5 attains device identification data from the database of the checkout terminal 4 via the network 21 and stores the data into the storage. Further, the server 5 receives the device identification data stored in the internal memory of the cellular phone 3. Upon receipt of the device identification data from the cellular phone 3, the authentication section 522 determines whether the received device identification data and the device identification data stored in the storage are equal to each other. If they are determined to be equal, the authentication section 522 compares the device identification data with the customer-specific data, to authenticate the device identification data. Thereafter, the settlement processing section 523 performs a processing for settling a debt, based on the purchase data stored in the storage and the customer-specific data corresponding to the device identification data. In this configuration, the server 5 attains the device identification data and the purchase data, which have previously been associated by the checkout terminal 4, and can therefore properly perform the settlement processing. In addition, the server 5 receives, from the customer's cellular phone 3, data concerning the data received from the checkout terminal 4. It is therefore possible to prevent the shop side from making an illegal action.

Alternatively, for example, the checkout terminal 4 may comprise a checkout terminal storage for storing device identification data. Thus, the checkout terminal 4 determines whether device identification data inputted by the input section and device identification data stored in the checkout terminal storage are equal to each other. If they are then determined to be equal in the checkout terminal 4, the server 5 attains the device identification data. In this configuration, whether a customer has been registered is determined in advance by the checkout terminal 4. Therefore, loads to the server 5 are reduced and the settlement processing in the server 5 can be faster.

In the second or third embodiment described above, the server 5 is configured to receive device identification data and purchase data from each of both of the cellular phone 3 and the checkout terminal 4. This configuration may further adopts the following configuration.

For example, the cellular phone 3 may comprise an input section for inputting receipt ID. Further, the internal memory of the cellular phone 3 stores the receipt ID and device identification data inputted by the input section, with the ID and the data associated with each other. Further, the server 5 receives the device identification data stored in the internal memory of the cellular phone 3, via the network 21, and attains the receipt ID. Thereafter, the authentication section 522 determines whether the receipt ID received from the cellular phone 3 and the receipt ID included in the purchase data received from the checkout terminal 4 are equal to each other. If they are then determined to be equal, the authentication section 522 associates the device identification data received from the cellular phone 3 with the purchase data received from the checkout terminal 4, and compares the device identification data and the customer-specific data with each other, to authenticate the customer identification data. Thereafter, the settlement processing section performs a processing for settling a debt, based on the purchase data associated by the authentication section 522 and the customer-specific data corresponding to the device identification data. In this configuration, a rapid settlement processing of receiving data from both of the cellular phone 3 and the checkout terminal 4 is maintained without connecting the cellular phone 3 and the checkout terminal 4, enabling transmission/reception of data. In addition, the received device identification data and purchase data are easily associated with each other, so that a proper settlement processing can be performed.

Alternatively, for example, device identification data may include principal confirmation data for identifying the customer himself or herself In addition, the checkout terminal 4 may comprise an input section for inputting the principal confirmation data, and a database for storing the principal confirmation data inputted by the input section and the purchase data, associated with each other. Thus, the server 5 attains the purchase data stored in the database of the checkout terminal 4, via the network 21, and receives the principal confirmation data. Thereafter, the authentication section 522 determines whether the principal confirmation data received from the checkout terminal 4 and the principal confirmation data included in the device identification data received from the cellular phone 3 are equal to each other. If they are then determined to be equal, the authentication section 522 associates the device identification data received from the cellular phone 3 with the purchase data received from the checkout terminal 4. Further, the authentication section 522 compares the device identification data with the customer-specific data, to authenticate the device identification data. Thereafter, the settlement processing section 523 performs a processing for settling a debt, based on the purchase data associated by the authentication section 522 and the customer-specific data corresponding to the device identification data. In this configuration, like the foregoing modification, a rapid settlement processing of receiving data from both of the cellular phone 3 and the checkout terminal 4 is maintained without connecting the cellular phone 3 and the checkout terminal 4, enabling transmission/reception of data. In addition, the received device identification data and purchase data are easily associated with each other, so that a proper settlement processing can be performed. Furthermore, the principal confirmation data is inputted through the input section of the checkout terminal 4. Therefore, it is possible to avoid illegal use of the cellular phone 3 by a stranger, for example.

Further, for example, the cellular phone 3 and the checkout terminal 4 each may comprise an input section for inputting comparison data which associates device identification data and purchase data with each other. The server 5 receives the device identification data from the cellular phone 3 via the network 21 and receives the comparison data inputted by the input section. Also, the server 5 receives the purchase data from the checkout terminal 4 and receives the comparison data inputted by the input section. Thereafter, the authentication section 522 determines whether the comparison data received from the cellular phone 3 and that from the checkout terminal 4 are equal to each other. If they are then determined to be equal, the authentication section 522 associates the device identification data received from the cellular phone 3 with the purchase data received from the checkout terminal 4. Further, the authentication section 522 compares the device identification data with the customer-specific data, to authenticate the device identification data. Thereafter, the settlement processing section 523 performs a processing for settling a debt, based on the purchase data associated by the authentication section 522 and the customer-specific data corresponding to the device identification data. In this configuration, a rapid settlement processing of receiving data from both of the cellular phone 3 and the checkout terminal 4 is maintained without connecting the cellular phone 3 and the checkout terminal 4, enabling transmission/reception of data. In addition, the received device identification data and purchase data are easily associated with each other, so that a proper settlement processing can be performed. Furthermore, the shop side or customer side can select arbitrary data as the comparison data, so that conveniences can be enhanced much more.

In each of the embodiments described above, description has been made of a configuration in which the checkout terminal 4 and the server 5 are separate. The present invention, however, is not limited to this. For example, the checkout terminal 4 may be configured to comprise the functions of the server 5. Alternatively, the server 5 may be configured to comprise the functions of the checkout terminal 4. In this configuration, it is unnecessary to output purchase data and the like to another device after calculation of the purchase data and the like. Accordingly, a settlement processing based on the purchase data can be performed rapidly.

In each of the above embodiments, a cellular phone number, an e-mail address, a password for checking the owner of the cellular phone, and the like are adopted as device identification data. The present invention, however, is not limited to this. For example, it is possible to adopt the name, address, and home telephone number of the owner of the cellular phone, a password set by the owner of the cellular phone, and the like.

In each of the above embodiments, authentication of a customer is carried out based on device identification data outputted from the cellular phone 3. The present invention, however, is not limited to this. For example, the configuration may be arranged such that a secret identification code, password, or the like is inputted when authenticating a customer. In this configuration, it is possible to avoid illegal use of the cellular phone 3 and can strengthen security for settlement using the cellular phone 3.

In each of the above embodiments, transmission and reception of data between the checkout terminal 4 and the cellular phone 3 are achieved via the terminal communicator 22. The present invention, however, is not limited to this. For example, data may be transmitted/received via the network 21. In this configuration, for example, labor of connecting the checkout terminal 4 with the cellular phone 3 via a coaxial cable can be avoided if the terminal communicator 22 is of a cable transmission system. Alternatively, in case of a wireless transmission system, the mobile communicator 31 and the register communicator 41A need not be provided for the cellular phone 3 and the checkout terminal 4, respectively.

In each of the above embodiments, description has been made of a configuration in which the settlement processing system 1 is used by a shop such as a restaurant, outlet store, or the like. The present invention, however, is not limited to this. The settlement processing system 1 may be applied to any settlement processing for settling a debt issued by a business transaction with a customer, e.g., settlement of taxi fares, bus fares, and the like.

In the first embodiment described previously, the checkout terminal 4 outputs a total purchase amount, purchase items, purchase quantities, and the like to the cellular phone 3 via the terminal communicator 22. However, the present invention is not limited to this. For example, the configuration may be arranged such that only the total purchase amount of the purchase data is outputted. In this configuration, the data amount outputted from the checkout terminal 4 can be reduced so that smooth data communication can be achieved between the checkout terminal 4 and the cellular phone 3.

In the third embodiment described above, device identification data and purchase data are associated with each other by comparing receipt ID. However, the present invention is not limited to this. For example, authentication may be achieved by data (a total purchase amount, purchase items, and the like which are purchase data) calculated by the checkout terminal 4. Alternatively, authentication may be achieved by data (a password, a secret identification code, or the like) set by the checkout terminal 4. Alternatively, authentication may be achieved by a combination of those data. In this configuration, processings can be performed by various data so that rapid and wide processings can be realized.

## Claims

1. A settlement processing apparatus for performing a settlement processing for settling a debt issued by a business transaction with a customer, comprising:
a customer identification data attaining section which attains customer identification data for identifying the customer;
a purchase data attaining section which attains purchase data concerning contents of the debt;
a data storage which stores customer-specific data including the customer identification data and specifying the customer;
an authentication section which compares the customer identification data attained by the customer identification data attaining section with the customer-specific data stored in the data storage, to authenticate the customer identification data; and
a settlement processing section which performs the processing for settling the debt, based on the customer-specific data corresponding to the customer identification data and the attained purchase data, if the authentication section authenticates the customer identification data, and which processes settlement completion data indicating that the processing is completed, after the processing is completed, making the settlement completion data be able to be notified to the customer.

2. The settlement processing apparatus according to claim 1, wherein
the customer identification data attaining section attains the customer identification data from at least one of a communication terminal owned by the customer and capable of transmitting/receiving data, and a checkout terminal which is owned by an organization and generates the purchase data concerning the contents of the debt, the organization serving the business transaction, and
the purchase data attaining section attains the purchase data from at least one of the communication terminal and the checkout terminal.

3. A settlement processing apparatus for performing a settlement processing for settling a debt issued by a business transaction with a customer, comprising:
a customer identification data attaining section which attains customer identification data for identifying the customer, from at least one of a communication terminal owned by the customer and capable of transmitting/receiving data, and a checkout terminal which is owned by an organization and generates purchase data concerning contents of the debt, the organization serving the business transaction;
a purchase data attaining section which attains the purchase data from at least one of the communication terminal and the checkout terminal;
a data storage which stores customer-specific data including the customer identification data and specifying the customer;
an authentication section which compares the customer identification data attained by the customer identification data attaining section with the customer-specific data stored in the data storage, to authenticate the customer identification data; and
a settlement processing section which performs the processing for settling the debt, based on the customer-specific data corresponding to the customer identification data and the attained purchase data, if the authentication section authenticates the customer identification data.

4. The settlement processing apparatus according to claim 2 or 3, wherein
the communication terminal and the checkout terminal can be connected via a terminal communicator, enabling transmission/reception of data,
the customer identification data is data specific to the communication terminal,
the communication terminal comprises a communication terminal storage which stores the customer identification data and the purchase data attained via the terminal communicator, with the customer identification data and the purchase data associated with each other, and
the customer identification data attaining section and the purchase data attaining section attain the customer identification data and the purchase data stored in the communication terminal storage.

5. The settlement processing apparatus according to claim 4, comprising a storage which stores the customer identification data and the purchase data attained from the communication terminal storage of the communication terminal, wherein
the purchase data includes purchase identification data which identifies the purchase data,
after the purchase data attaining section attains the purchase data from the communication terminal storage of the communication terminal, the purchase data attaining section further attains the purchase identification data from the checkout terminal,
the authentication section determines whether the purchase identification data attained from the checkout terminal by the purchase data attaining section is equal to the purchase identification data included in the purchase data stored in the storage, and if both are determined to be equal, the authentication section compares the customer identification data corresponding to the purchase identification data and stored in the storage with the customer-specific data, to authenticate the customer identification data, and
if the customer identification data is authenticated by the authentication section, the settlement processing section performs the processing for settling the debt, based on the purchase data stored in the storage and the customer-specific data corresponding to the customer identification data.

6. The settlement processing apparatus according to claim 2 or 3, wherein
the checkout terminal comprises an input section for inputting the customer identification data, and a checkout terminal storage which stores the customer identification data inputted by the input section, and the purchase data, with both associated with each other, and
the customer identification data attaining section and the purchase data attaining section attain the customer identification data and the purchase data stored in the checkout terminal storage of the checkout terminal.

7. The settlement processing apparatus according to claim 6, comprising a storage which stores the customer identification data and the purchase data attained from the checkout terminal storage of the checkout terminal, wherein
the customer identification data is data specific to the communication terminal,
the communication terminal comprises a communication terminal storage which stores the customer identification data,
after the customer identification data attaining section attains the customer identification data from the checkout terminal storage of the checkout terminal, the customer identification data attaining section further attains the customer identification data stored in the communication terminal storage of the communication terminal,
the authentication section determines whether the customer identification data attained from the communication terminal storage of the communication terminal by the customer identification data attaining section is equal to the customer identification data stored in the storage, and if both are determined to be equal, the authentication section compares the customer identification data with the customer-specific data, to authenticate the customer identification data, and
if the customer identification data is authenticated by the authentication section, the settlement processing section performs the processing for settling the debt, based on the purchase data stored in the storage and the customer-specific data corresponding to the customer identification data.

8. The settlement processing apparatus according to claim 6, wherein the checkout terminal comprises a checkout terminal storage which stores the customer identification data,
the checkout terminal determines whether the customer identification data inputted by the input section is equal to the customer identification data stored in the checkout terminal storage, and
if both are determined to be equal by the checkout terminal, the customer identification data attaining section attains the customer identification data.

9. The settlement processing apparatus according to claim 2 or 3, wherein
the customer identification data is data specific to the communication terminal,
the communication terminal comprises a communication terminal storage which stores the customer identification data,
the customer identification data attaining section attains the customer identification data stored in the communication terminal storage of the communication terminal, and
the purchase data attaining section attains the purchase data from the checkout terminal.

10. The settlement processing apparatus according to claim 9, wherein
the communication terminal and the checkout terminal can be connected via a terminal communicator, enabling transmission/reception of data,
the checkout terminal comprises a checkout terminal storage which stores the purchase data and the customer identification data attained via the terminal communicator, with the purchase data and the customer identification data associated with each other,
the purchase data attaining section attains the purchase data stored in the checkout terminal storage of the checkout terminal, and also attains the customer identification data,
the authentication section determines whether the customer identification data attained from the checkout terminal storage of the checkout terminal by the purchase data attaining section is equal to the customer identification data attained from the communication terminal storage of the communication terminal by the customer identification data attaining section, and if both are determined to be equal, the authentication section associates the customer identification data attained by the customer identification data attaining section with the purchase data attained by the purchase data attaining section, and compares the customer identification data with the customer-specific data, to authenticate the customer identification data, and
if the customer identification data is authenticated by the authentication section, the settlement processing section performs the processing for settling the debt, based on the purchase data associated by the authentication section and the customer-specific data corresponding to the customer identification data.

11. The settlement processing apparatus according to claim 9, wherein
the communication terminal and the checkout terminal can be connected via a terminal communicator, enabling transmission/reception of data,
the purchase data includes purchase identification data which identifies the purchase data,
the communication terminal storage of the communication terminal stores the customer identification data and the purchase identification data attained by the terminal communicator, with the customer identification data and the purchase identification data associated with each other,
the customer identification data attaining section attains the customer identification data stored in the communication terminal storage of the communication terminal, and also attains the purchase identification data,
the authentication section determines whether the purchase identification data attained from the communication terminal storage of the communication terminal by the customer identification data attaining section is equal to the purchase identification data included in the purchase data attained from the checkout terminal by the purchase data attaining section, and if both are determined to be equal, the authentication section associates the customer identification data attained by the customer identification data attaining section with the purchase data attained by the purchase data attaining section, and compares the customer identification data with the customer-specific data, to authenticate the customer identification data, and
if the customer identification data is authenticated by the authentication section, the settlement processing section performs the processing for settling the debt, based on the purchase data associated by the authentication section and the customer-specific data corresponding to the customer identification data.

12. The settlement processing apparatus according to claim 9, wherein
the purchase data includes purchase identification data which identifies the purchase data,
the communication terminal comprises an input section for inputting the purchase identification data,
the communication terminal storage of the communication terminal stores the purchase identification data inputted by the input section and the customer identification data, with the purchase identification data and the customer identification data associated with each other,
the customer identification data attaining section attains the customer identification data stored in the communication terminal storage of the communication terminal, and also attains the purchase identification data,
the authentication section determines whether the purchase identification data attained from the communication terminal storage of the communication terminal by the customer identification data attaining section is equal to the purchase identification data included in the purchase data attained from the checkout terminal by the purchase data attaining section, and if both are determined to be equal, the authentication section associates the customer identification data attained by the customer identification data attaining section with the purchase data attained by the purchase data attaining section, and compares the customer identification data with the customer-specific data, to authenticate the customer identification data, and
if the customer identification data is authenticated by the authentication section, the settlement processing section performs the processing for settling the debt, based on the purchase data associated by the authentication section and the customer-specific data corresponding to the customer identification data.

13. The settlement processing apparatus according to claim 9, wherein
the customer identification data includes principle confirmation data for confirming the customer himself or herself,
the checkout terminal comprises an input section for inputting the principal confirmation data, and a checkout terminal storage which stores the principal confirmation data inputted by the input section and the purchase data, with the principal confirmation data and the purchase data associated with each other,
the purchase data attaining section attains the purchase data stored in the checkout terminal storage of the checkout terminal, and also attains the principal confirmation data,
the authentication section determines whether the principal confirmation data attained from the checkout terminal storage of the checkout terminal by the purchase data attaining section is equal to the principal confirmation data included in the customer identification data attained from the communication terminal storage of the communication terminal by the customer identification data attaining section, and if both are determined to be equal, the authentication section associates the customer identification data attained by the customer identification data attaining section with the purchase data attained by the purchase data attaining section, and compares the customer identification data with the customer-specific data, to authenticate the customer identification data, and
if the customer identification data is authenticated by the authentication section, the settlement processing section performs the processing for settling the debt, based on the purchase data associated by the authentication section and the customer-specific data corresponding to the customer identification data.

14. The settlement processing apparatus according to claim 9, wherein
the communication terminal and the checkout terminal each have an input section for inputting comparison data which associates the customer identification data with the purchase data,
the customer identification data attaining section attains the customer identification data from the communication terminal, and also attains the comparison data inputted by the input section,
the purchase data attaining section attains the purchase data from the checkout terminal, and also attains the comparison data inputted by the input section,
the authentication section determines whether the comparison data attained by the customer identification data attaining section is equal to the comparison data attained by the purchase data attaining section, and if both are determined to be equal, the authentication section associates the customer identification data attained by the customer identification data attaining section with the purchase data attained by the purchase data attaining section, and compares the customer identification data with the customer-specific data, to authenticate the customer identification data, and
if the customer identification data is authenticated by the authentication section, the settlement processing section performs the processing for settling the debt, based on the purchase data associated by the authentication section and the customer-specific data corresponding to the customer identification data.

15. The settlement processing apparatus according to any of claims 2 through 14, wherein
the customer identification data, the customer-specific data, and the purchase data each include residence data concerning residence of at least one of the customer, the communication terminal, and the checkout terminal, and
after completion of the processing for settling the debt, the settlement processing section processes settlement completion data indicating that the processing has been completed on the basis of the residence data included in attained data, making at least one of the communication terminal and the checkout terminal be able to notify the customer of the settlement completion data.

16. The settlement processing apparatus according to any of claims 2 through 15, wherein
the customer identification data, the customer-specific data, and the purchase data each include residence data concerning residence of at least one of the customer, the communication terminal, and the checkout terminal, and
before performing the processing for settling the debt, the settlement processing section processes settlement content data concerning contents of settlement of the debt, on the basis of the residence data included in attained data, making at least one of the communication terminal and the checkout terminal be able to notify the customer of the settlement content data.

17. The settlement processing apparatus according to any of claims 1 through 16, wherein
the data storage stores the attained purchase data and settlement completion determination data indicating whether the processing for settling the debt on the basis of the attained purchase data has been completed, with the attained purchase data and the settlement completion determination data associated with each other, and
before performing the processing for settling the debt, the settlement processing section determines whether the processing for settling the debt has been completed, on the basis of the settlement completion determination data corresponding to the purchase data.

18. The settlement processing apparatus according to claim 17, wherein
if it is determined that the processing for settling the debt has not yet been completed, the settlement processing section performs the processing for settling the debt, based on the customer identification data authenticated by the authentication section and the attained purchase data.

19. The settlement processing apparatus according to any of claims 1 through 18, comprising:
a setting input recognition section which recognizes a setting input requesting disclosure of the purchase data by an input operation; and
a notification section which outputs the purchase data, making the customer be able to recognize the purchase data, if the setting input is recognized by the setting input recognition section.

20. A settlement processing system which performs a settlement processing for settling a debt issued by a business transaction with a customer, comprising:
the settlement processing apparatus according to any of claims 1 through 19;
a communication terminal owned by the customer and capable of transmitting/receiving data;
a checkout terminal which is owned by an organization and generates the purchase data concerning the contents of the debt, the organization serving the business transaction; and
a communicator which enables transmission/reception of data among the settlement processing apparatus, the communication terminal, and the checkout terminal.

21. The settlement processing system according to claim 20, wherein
the checkout terminal can output, to the communication terminal via the communicator, connection command data for connecting the communication terminal to the settlement processing apparatus, enabling transmission/reception of data, and
the communication terminal connects to the settlement processing apparatus via the communicator, upon receipt of the connection command data.

22. The settlement processing system according to claim 20 or 21, wherein the communicator is a network.

23. A settlement processing method for performing a settlement processing for settling a debt issued by a business transaction with a customer, comprising:
attaining customer identification data for identifying the customer, and purchase data concerning contents of the debt;
comparing the attained customer identification data with customer-specific data including the customer identification data, which is stored in advance, and specifying the customer, to authenticate the customer identification data; and
performing the processing for settling the debt, based on the customer identification data and the attained purchase data, if the customer identification data is authenticated, and settlement completion data indicating that the processing is completed, after the processing is completed, making the settlement completion data be able to be notified to the customer.

24. A settlement processing method for performing a settlement processing for settling a debt issued by a business transaction with a customer, comprising:
attaining customer identification data for identifying the customer, from at least one of a communication terminal owned by the customer and capable of transmitting/receiving data, and a checkout terminal which is owned by an organization and generates purchase data concerning contents of the debt, the organization serving the business transaction;
attaining the purchase data from at least one of the communication terminal and the checkout terminal;
comparing the attained customer identification data with the customer-specific data including the customer identification data, which is stored in advance, and specifying the customer, to authenticate the customer identification data; and
performing the processing for settling the debt, based on the authenticated customer identification data and the attained purchase data, if the customer identification data is authenticated.

25. A settlement processing program for making a computer execute the settlement processing method according to claim 23 or 24.

26. A recording medium which records the settlement processing program according to claim 25 in a computer-readable form.
